# EUROPEAN PATENT APPLICATION

(11) **EP 4 625 143 A1**
(43) Date of publication of application: **01.10.2025**
(21) Application number: 23900052.4
(22) Date of filing: 07.12.2023
(51) Int. Cl.: G06F 8/20

(54) **DEVICE-CLOUD COLLABORATIVE CONTENT PREVIEW METHOD AND APPARATUS**

(30) Priority: 09.12.2022 CN 202211576593; 28.06.2023 CN 202310780902
(71) Applicant: Huawei Technologies Co., Ltd., Shenzhen, Guangdong 518129 (CN)
(72) Inventor: WANG, Shi, Shenzhen, Guangdong 518129 (CN); LIN, Zehui, Shenzhen, Guangdong 518129 (CN); CAI, Kangying, Shenzhen, Guangdong 518129 (CN)
(74) Representative: Eisenführ Speiser
(86) International application number: PCT/CN2023/137052
(87) International publication number: WO 2024/120480

(57) **Abstract**

This application provides a method and an apparatus for previewing device-cloud collaboration content. The method for previewing device-cloud collaboration content provided in this application includes: displaying an editing interface, where the editing interface includes a preview control and a plurality of setting controls, the plurality of setting controls are used to set parameters related to the device-cloud collaboration content, and the parameters related to the device-cloud collaboration content include a parameter of a receiving device of the device-cloud collaboration content; and in response to a trigger operation on the preview control, displaying a preview interface based on the parameter of the receiving device, where the preview interface is used to simulate an interface for displaying the device-cloud collaboration content on the receiving device. The solutions provided in this application can simplify an editing process, and help a user improve editing efficiency.

## Description

This application claims priorities to Chinese Patent Application No. 202211576593.7, filed with the China National Intellectual Property Administration on December 9, 2022 and entitled "METHOD AND APPARATUS FOR CONTENT EDITING AND PREVIEWING BASED ON DEVICE-CLOUD COLLABORATION", and to Chinese Patent Application No. 202310780902.0, filed with the China National Intellectual Property Administration on June 28, 2023 and entitled "METHOD AND APPARATUS FOR PREVIEWING DEVICE-CLOUD COLLABORATION CONTENT", both of which are incorporated herein by reference in their entireties.

### TECHNICAL FIELD

This application relates to device-cloud collaboration technologies, and in particular, to a method and an apparatus for previewing device-cloud collaboration content.

### BACKGROUND

Device-cloud collaboration content is usually content that is mainly computed or computed with high computing capability on a cloud side and is presented after remaining calculation is completed on a device side. A device-cloud collaboration game is an implementation of the foregoing device-cloud collaboration content. A device on a cloud side completes game data computing that requires high computing capability, and transmits intermediate data to a device side, and a device on a device side completes remaining computing and presents a result.

Game content editing is one of the most important parts in game development. Usually, a user (for example, an editor) edits game content through a game engine editor or a game editor. The device-cloud collaboration game exists on both the device side and the cloud side of the game, but has different attributes on the two sides. Therefore, during game content editing, the user uses the game engine editor to divide a game project with device-cloud collaboration content into a cloud-side version and a device-side version, synchronously edit the device-cloud collaboration content in the two versions, configure an attribute of the device-cloud collaboration game for each version, and then, respectively run the cloud-side version and the device-side version on the cloud side and the device side, to obtain feedback of a final presentation result of the device side under the current configuration.

However, the foregoing editing process of the device-cloud collaboration content needs to be repeatedly performed for a plurality of times. This is cumbersome and causes high labor intensity.

### SUMMARY

This application provides a method and an apparatus for previewing device-cloud collaboration content, to simplify an editing process, help a user improve editing efficiency, and reduce labor intensity.

According to a first aspect, this application provides a method for previewing device-cloud collaboration content, where the method is performed by a generation device of the device-cloud collaboration content, and includes: displaying an editing interface, where the editing interface includes a preview control and a plurality of setting controls, the plurality of setting controls are used to set parameters related to the device-cloud collaboration content, and the parameters related to the device-cloud collaboration content include a parameter of a receiving device of the device-cloud collaboration content; and in response to a trigger operation on the preview control, displaying a preview interface based on the parameter of the receiving device, where the preview interface is used to simulate an interface for displaying the device-cloud collaboration content on the receiving device.

In this application, the cloud side completes an entire editing process of the device-cloud collaboration content by editing and simulating the device side, so that a user can autonomously modify the parameter configuration and quickly obtain a feedback, thereby simplifying the editing process, helping the user improve editing efficiency, and reducing labor intensity.

The plurality of setting controls are used to set the parameters related to the device-cloud collaboration content. In embodiments of this application, the parameters related to the device-cloud collaboration content may include:

### (1) Parameter of a receiving device of the device-cloud collaboration content

The parameter is used to simulate a running environment of the receiving device, for example, may include but is not limited to a type of the receiving device, a model of the receiving device, a chip model of the receiving device, a battery level of the receiving device, resolution of the receiving device, a volume of the receiving device, an ambient temperature of the receiving device, and the like. The receiving device may be simulated on the generation device based on the foregoing parameters, so that even if no actual receiving device is used, a virtual receiving device may be constructed on the generation device based on an attribute of the receiving device. In this way, the generation device may edit and generate the device-cloud collaboration content, and may further simulate the receiving device to present the foregoing edited and generated device-cloud collaboration content to the user, so that the user can quickly and intuitively preview editing effect.

### (2) Coding parameter

The coding parameter is used to implement encoding processing on the device-cloud collaboration content to obtain a bitstream, or implement decoding processing on the bitstream to reconstruct the device-cloud collaboration content. For example, the coding parameter may include but is not limited to a video encoder/decoder parameter, an audio encoder/decoder parameter, and the like. For the device-cloud collaboration content, refer to a video/an audio encoding/decoding method. Therefore, a plurality of encoding/decoding parameters are involved. The generation device may encode the device-cloud collaboration content based on the encoding parameter to obtain the bitstream, and the receiving device may decode the bitstream based on the coding parameter to obtain reconstructed device-cloud collaboration content.

### (3) Transmission parameter

The transmission parameter is used to simulate a status and an environment of bitstream transmission, for example, may include but is not limited to a sending/receiving frame rate, a maximum sending/receiving bit rate, a network delay, network fluctuation, a physical distance, a physical location, a transmission channel, and the like. The bitstream obtained by encoding the device-cloud collaboration content needs to be transmitted from the generation device to the receiving device. To adapt to a situation of a network or another transmission medium, parameters sent by the generation device and received by the receiving device may be configured based on the foregoing parameters. In addition, a situation faced when the bitstream is transmitted from the generation device to the receiving device or in the network or on the another transmission medium is simulated, to construct a change caused by the foregoing situation when the bitstream arrives at the receiving device.

### (4) Instance attribute parameter of the device-cloud collaboration content

The instance attribute parameter of the device-cloud collaboration content is used to generate the device-cloud collaboration content, for example, may include but is not limited to a location, a proportion, rotation, effect strength, a weight, and the like of an instance (for example, an object, a moving target, or a person in a picture of the device-cloud collaboration content) of the device-cloud collaboration content. These parameters are associated with rendering, image quality, and the like of the device-cloud collaboration content, and may have most direct impact on presentation effect of the receiving device. Changing one or more parameter values may result in a change in the presentation effect of the receiving device.

In embodiments of this application, the plurality of setting controls included in the editing interface correspond to the plurality of parameters, and the user may change, by operating the setting controls, parameter values corresponding to the setting controls.

In a possible implementation, the editing interface may include a plurality of windows.

A first window may correspond to a parameter of the receiving device of the device-cloud collaboration content. The first window may include a plurality of controls, and the plurality of controls correspond to parameters of the receiving device. For example, the plurality of controls each are used to set a type of the receiving device, a model of the receiving device, a chip model of the receiving device, a battery level of the receiving device, resolution of the receiving device, a volume of the receiving device, an ambient temperature of the receiving device, and the like.

A second window may correspond to a coding parameter. The second window may include a plurality of controls, and the plurality of controls correspond to coding parameters. For example, the plurality of controls each are used to set a video encoder/decoder parameter, an audio encoder/decoder parameter, and the like.

A third window may correspond to a transmission parameter. The third window may include a plurality of controls, and the plurality of controls correspond to transmission parameters. For example, the plurality of controls each are used to set a sending/receiving frame rate, a maximum sending/receiving bit rate, a network delay, network fluctuation, a physical distance, a physical location, a transmission channel, and the like.

A fourth window may correspond to an instance attribute parameter of the device-cloud collaboration content. The fourth window may include a plurality of controls, and the plurality of controls correspond to instance attribute parameters of the device-cloud collaboration content. For example, the plurality of controls each are used to set a location, a proportion, rotation, effect strength, a weight, and the like of an instance of the device-cloud collaboration content.

It should be noted that the foregoing four windows do not constitute a limitation on the editing interface. The editing interface in this application may include fewer or more windows. This is associated with an editing requirement of the device-cloud collaboration content. A quantity of windows and content are not specifically limited in this application. In addition, a control included in each window is not specifically limited either.

In a possible implementation, the editing interface may include a plurality of controls.

A first control may correspond to a parameter of the receiving device of the device-cloud collaboration content. The first control may include a plurality of subcontrols, and the plurality of subcontrols correspond to parameters of the receiving device. For example, the plurality of subcontrols each are used to set a type of the receiving device, a model of the receiving device, a chip model of the receiving device, a battery level of the receiving device, resolution of the receiving device, a volume of the receiving device, an ambient temperature of the receiving device, and the like.

A second control may correspond to a coding parameter. The second control may include a plurality of subcontrols, and the plurality of subcontrols correspond to coding parameters. For example, the plurality of subcontrols each are used to set a video encoder/decoder parameter, an audio encoder/decoder parameter, and the like.

A third control may correspond to a transmission parameter. The third control may include a plurality of subcontrols, and the plurality of subcontrols correspond to transmission parameters. For example, the plurality of subcontrols each are used to set a sending/receiving frame rate, a maximum sending/receiving bit rate, a network delay, network fluctuation, a physical distance, a physical location, a transmission channel, and the like.

A fourth control may correspond to an instance attribute parameter of the device-cloud collaboration content. The fourth control may include a plurality of subcontrols, and the plurality of subcontrols correspond to instance attribute parameters of the device-cloud collaboration content. For example, the plurality of subcontrols each are used to set a location, a proportion, rotation, effect strength, a weight, and the like of an instance of the device-cloud collaboration content.

It should be noted that the foregoing four controls do not constitute a limitation on the editing interface. The editing interface in this application may include fewer or more controls. This is associated with an editing requirement of the device-cloud collaboration content. A quantity of controls and content are not specifically limited in this application. In addition, a subcontrol included in each control is not specifically limited either.

The preview control may be used to trigger presentation of edited device-cloud collaboration content. The preview control may be presented in each window or each control. This is not specifically limited.

The preview interface is used to simulate an interface for displaying the device-cloud collaboration content on the receiving device.

As described above, the editing interface displays a plurality of setting controls. Based on this, the user may perform an operation on the plurality of setting controls in the editing interface, for example, tap a control, enter a text/a number, or drag a slider, to modify a value of a parameter corresponding to a setting control. After the user modifies values of one or more parameters, the user may trigger a preview control in the editing interface in time, to preview impact caused by the foregoing modification of the device-cloud collaboration content and effect generated therefrom.

In embodiments of this application, the generation device may first obtain the device-cloud collaboration content; simulate a transmission condition based on the transmission parameter, to simulate the device-cloud collaboration content received on the receiving device; simulate display of the receiving device based on the parameter of the receiving device of the device-cloud collaboration content; and further display the device-cloud collaboration content in the preview interface.

Obtaining the device-cloud collaboration content may include: editing content of the device-cloud collaboration in advance based on a requirement of the device-cloud collaboration content. This operation does not involve transmission or presentation. Therefore, the device-cloud collaboration content may be edited in advance and then stored. Subsequent tests may be performed only for performance of transmission and receiving devices. Alternatively, the device-cloud collaboration content is obtained from a preset file. That is, the user edits the content of the device-cloud collaboration in advance based on the requirement of the device-cloud collaboration content, and stores the content in a form of a file; or generates the device-cloud collaboration content based on the instance attribute parameter of the device-cloud collaboration content. In other words, in the editing process, the user may edit the content while testing the performance of the transmission and receiving devices.

As described above, based on the transmission parameter, the situation faced when the bitstream is transmitted from the generation device to the receiving device or in the network or on another medium may be simulated, to construct the change caused by the impact of the foregoing situation when the bitstream arrives at the receiving device. Therefore, even if the generation device does not actually transmit the bitstream, the generation device may still construct a virtual transmission path, to simulate data received by the receiving device after the bitstream is transmitted on the virtual transmission path.

The generation device may obtain the receiving device through simulation based on the parameter of the receiving device of the device-cloud collaboration content, so that even if no actual receiving device is used, a virtual receiving device may be constructed on the generation device based on an attribute of the receiving device. Therefore, the generation device may simulate the receiving device to process the received data, to obtain the device-cloud collaboration content on the receiving device.

In a possible implementation, the generation device obtains the device-cloud collaboration content; encodes the device-cloud collaboration content based on the coding parameter to obtain the bitstream; sends the bitstream based on the transmission parameter; and simulates, based on the parameter of the receiving device of the device-cloud collaboration content, the receiving device to receive the bitstream; decodes the bitstream based on the coding parameter to simulate the device-cloud collaboration content received on the receiving device; and obtains display of the receiving device obtained through simulation, so that the device-cloud collaboration content is displayed in the preview interface.

In the foregoing process, a complete data processing process from the generation device to the receiving device may be simulated in more detail. To be specific, the generation device obtains the device-cloud collaboration content based on the instance attribute parameter of the device-cloud collaboration content, encodes the device-cloud collaboration content based on the coding parameter to obtain the bitstream, and then sends the bitstream based on the transmission parameter. In a bitstream transmission process, the generation device simulates a transmission environment, as if the bitstream is transmitted in a real environment. The receiving device (obtained by the generation device through simulation based on the parameter of the receiving device) receives the bitstream, decodes the bitstream based on the coding parameter, the attribute of the receiving device, the performance of the receiving device, and the like, reconstructs the device-cloud collaboration content based on the instance attribute parameter of the device-cloud collaboration content, and displays the device-cloud collaboration content in the preview interface.

The generation device simulates a virtual receiving device based on the parameter of the receiving device, and displays, to the user in a form of a preview interface, a content picture obtained under the foregoing parameter configuration. In this way, the user can quickly and intuitively see effect that can be presented on the receiving device under the foregoing configured parameters, so as to modify a corresponding parameter in time based on a requirement.

According to a second aspect, this application provides an apparatus for previewing device-cloud collaboration content, including a display module. The display module is configured to display an editing interface, where the editing interface includes a preview control and a plurality of setting controls, the plurality of setting controls are used to set parameters related to the device-cloud collaboration content, and the parameters related to the device-cloud collaboration content include a parameter of a receiving device of the device-cloud collaboration content. The display module is further configured to: in response to a trigger operation on the preview control, display a preview interface based on the parameter of the receiving device, where the preview interface is used to simulate an interface for displaying the device-cloud collaboration content on the receiving device.

In a possible implementation, the parameter of the receiving device includes at least one of the following: a type of the receiving device, a model of the receiving device, a chip model of the receiving device, a battery level of the receiving device, resolution of the receiving device, a volume of the receiving device, and an ambient temperature of the receiving device.

In a possible implementation, the parameters related to the device-cloud collaboration content further include a coding parameter and/or a transmission parameter. The coding parameter is used to implement encoding processing on the device-cloud collaboration content to obtain a bitstream, or implement decoding processing on the bitstream to reconstruct the device-cloud collaboration content; and the transmission parameter is used to simulate a status and an environment of transmitting the bitstream.

In a possible implementation, the display module is further configured to: in response to a trigger operation on a first setting control, display a setting window of the coding parameter, where the setting window of the coding parameter includes a plurality of first setting subcontrols, and the plurality of first setting subcontrols each are used to set a video encoder/decoder parameter and an audio encoder/decoder parameter, and the first setting control is one of the plurality of setting controls.

In a possible implementation, the display module is further configured to: in response to a trigger operation on a second setting control, display a setting window of the transmission parameter, where the setting window of the transmission parameter includes a plurality of second setting subcontrols, the plurality of second setting subcontrols each are used to set a sending/receiving frame rate, a maximum sending/receiving bit rate, a network delay, network fluctuation, a physical distance, a physical location, and a transmission channel, and the second setting control is one of the plurality of setting controls.

In a possible implementation, the parameters related to the device-cloud collaboration content further include an instance attribute parameter of the device-cloud collaboration content. The instance attribute parameter is used to generate the device-cloud collaboration content.

In a possible implementation, the display module is further configured to: in response to a trigger operation on a third setting control, display a setting window of the instance attribute parameter, where the setting window of the instance attribute parameter includes a plurality of third setting subcontrols, the plurality of third setting subcontrols each are used to set a location, a proportion, rotation, effect strength, and a weight of an instance of the device-cloud collaboration content, and the third setting control is one of the plurality of setting controls.

In a possible implementation, the device-cloud collaboration content includes content of a device-cloud collaboration game, content of a device-cloud collaboration document, or content of a device-cloud collaboration live broadcast.

According to a third aspect, this application provides an electronic device, including: one or more processors; and a memory, configured to store one or more programs. When the one or more programs are executed by the one or more processors, the one or more processors are enabled to implement the method according to any one of the implementations of the first aspect.

According to a fourth aspect, this application provides a computer-readable storage medium, including a computer program. When the computer program is executed on a computer, the computer is enabled to perform the method according to any one of the possible implementations of the first aspect.

According to a fifth aspect, this application provides a computer program product. The computer program product includes computer program code. When the computer program code is run on a computer, the computer is enabled to perform the method according to any one of the implementations of the first aspect.

### BRIEF DESCRIPTION OF DRAWINGS

FIG. 1 is a diagram of an application scenario of device-cloud collaboration content according to this application;
FIG. 2 is a diagram of a structure of a generation device 200 of device-cloud collaboration content according to this application;
FIG. 3 is a diagram of a structure of a receiving device 300 of device-cloud collaboration content according to this application;
FIG. 4 is a flowchart of a process 400 of a method for previewing device-cloud collaboration content according to this application;
FIG. 5a and FIG. 5b each are a diagram of a device-cloud collaboration content editing and preview interface according to this application;
FIG. 6a is a diagram of a game editor interface;
FIG. 6b is a diagram of a device-cloud collaboration content editing and preview user interface;
FIG. 6c is a diagram of a device-cloud collaboration content editing and preview user interface;
FIG. 6d is a diagram of an editing interface in which a preset parameter is mapped to a user control;
FIG. 6e is a diagram of a game editor interface;
FIG. 6f is a diagram of a game editor interface;
FIG. 6g is a diagram of a device-cloud collaboration content preview interface;
FIG. 6h is a diagram of a preview interface;
FIG. 7 is a diagram of a game editor;
FIG. 8 is a diagram of two game editors;
FIG. 9 is a diagram of simulating device-cloud transmission in a storage/read manner; and
FIG. 10 is a diagram of a structure of an apparatus 1000 for previewing device-cloud collaboration content according to this application.

### DESCRIPTION OF EMBODIMENTS

To make objectives, technical solutions, and advantages of this application clearer, the following clearly and completely describes the technical solutions in this application with reference to accompanying drawings in this application. It is clear that the described embodiments are a part rather than all of embodiments of this application. All other embodiments obtained by a person of ordinary skill in the art based on embodiments of this application without creative efforts shall fall within the protection scope of this application.

In the specification, embodiments, claims, and accompanying drawings of this application, the terms "first", "second", and the like are merely intended for distinguishing and description, and shall not be understood as indicating or implying relative importance, or indicating or implying a sequence. In addition, the terms "include", "have", and any variant thereof are intended to cover non-exclusive inclusion, for example, include a series of steps or units. For example, a method, system, product, or device is not necessarily limited to those steps or units expressly listed, but may include other steps or units not expressly listed or inherent to such a process, method, product, or device.

It should be understood that in this application, "at least one (item)" refers to one or more and "a plurality of" refers to two or more. The term "and/or" is used for describing an association relationship between associated objects, and represents that three relationships may exist. For example, "A and/or B" may represent the following three cases: Only A exists, only B exists, and both A and B exist, where A and B may be singular or plural. The character "/" usually indicates an "or" relationship between the associated objects. The expression "at least one of the following items (pieces)" or a similar expression means any combination of these items, including a single item (piece) or any combination of a plurality of items (pieces). For example, at least one item (piece) of a, b, or c may indicate a, b, c, a and b, a and c, b and c, or a, b, and c, where a, b, and c may be singular or plural.

### Terms in this application:

Device-cloud collaboration content: The device-cloud collaboration content is content that is mainly computed or computed with high computing capability on a cloud side and is presented after remaining calculation is completed on a device side, for example, a device-cloud collaboration game.

Device-cloud collaboration data: The device-cloud collaboration data may also be referred to as device-cloud collaboration intermediate data, intermediate data, or the like. The data is generated by the cloud side, transmitted to the device side for using, and used by the device side to complete content presentation.

Device-cloud transmission: After the device-cloud collaboration data is generated on the cloud side, the device-cloud transmission is a process of encoding on the cloud side, transmitting through the network or another medium, and decoding on the device side.

Device-cloud transmission condition: The device-cloud transmission condition is a situation of a network or another medium used for device-cloud transmission, where the situation affects quality of the device-cloud transmission.

Game content: The game content is any templates, modules, components, functions, features, images, audio and video data, or other content used or working during game production and running.

Presentation: The presentation includes an action that a game device conveys game content to a user, for example, image rendering, audio and video playback, mobile phone vibration, LED indicator blinking, and controller vibration.

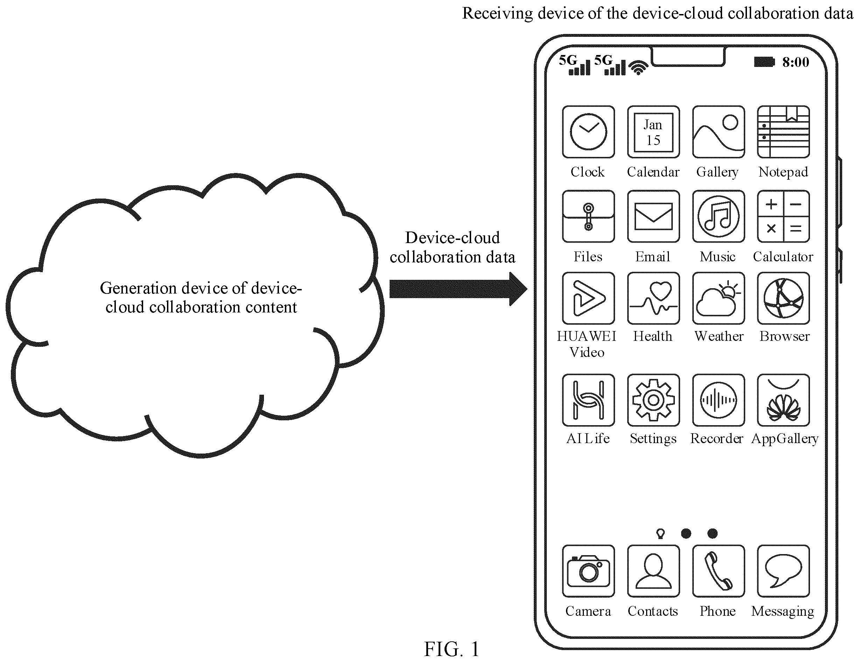

FIG. 1 is a diagram of an application scenario of device-cloud collaboration content according to this application. As shown in FIG. 1, the device-cloud collaboration content is run in this scenario, for example, content of a device-cloud collaboration game, content of a device-cloud collaboration document, or content of a device-cloud collaboration live broadcast. A generation device of the device-cloud collaboration content (which may be referred to as a generation device for short, that is, a device on a cloud side (which may be referred to as a cloud side for short), for example, including a computer or a server) completes a main calculation or computing with high computing capability of the device-cloud collaboration content, and sends device-cloud collaboration data (also referred to as intermediate data). A receiving device of the device-cloud collaboration data (which may be referred to as a receiving device for short, that is, a device on a device side (which may be referred to as a device side for short), for example, including a mobile phone or a tablet) receives the device-cloud collaboration data, completes a remaining calculation, and then presents the device-cloud collaboration content based on the device-cloud collaboration data.

This embodiment of this application may be performed by the generation device of the device-cloud collaboration content.

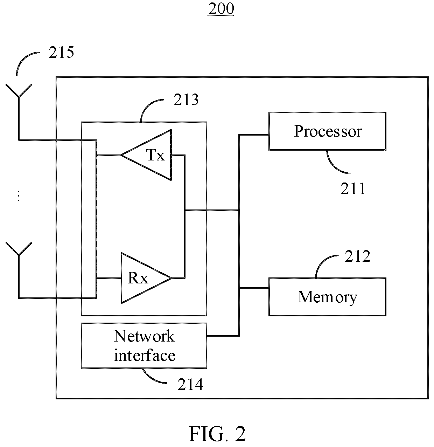

FIG. 2 is a diagram of a structure of a generation device 200 of device-cloud collaboration content according to this application. It should be understood that the generation device 200 of the device-cloud collaboration content shown in FIG. 2 is merely an example, and the generation device 200 of the device-cloud collaboration content may have more or fewer components than those shown in the figure, or a combination of two or more components, or an arrangement of different components. The various components shown in FIG. 2 may be implemented in hardware including one or more signal processing circuits and/or application-specific integrated circuits, software, or a combination of hardware and software. The device may be, for example, an electronic device with high computing capability, for example, a computer or a server.

The generation device of the device-cloud collaboration content includes at least one processor 211, at least one memory 212, at least one transceiver 213, at least one network interface 214, and at least one antenna 215. The processor 211, the memory 212, the transceiver 213, and the network interface 214 are connected, for example, connected through a bus. In embodiments of this application, the connection may include various interfaces, transmission lines, buses, or the like. This is not limited in embodiments. The antenna 215 is connected to the transceiver 213. The network interface 214 is configured to enable the generation device of the device-cloud collaboration content to be connected to another device through a communication link.

The processor 211 is mainly configured to process cloud-side data in the device-cloud collaboration content, control the generation device of the entire device-cloud collaboration content, execute a software program, and process data of the software program, for example, configured to support the generation device of the device-cloud collaboration content in performing the actions described in embodiments.

The memory 212 is mainly configured to store the software program and data. The memory 212 may exist independently, and is connected to the processor 211. Optionally, the memory 212 may be integrated with the processor 211, for example, integrated into a chip. The memory 212 can store program code for executing the technical solutions in embodiments of this application, and the processor 211 controls the execution. Various types of executed computer program code may also be considered as driver programs of the processor 211.

FIG. 2 shows only one memory and one processor. In an actual generation device of device-cloud collaboration content, there may be a plurality of processors and a plurality of memories. The memory may also be referred to as a storage medium, a storage device, or the like. The memory may be a storage element on a same chip as the processor, that is, an on-chip storage element, or may be an independent storage element. This is not limited in embodiments of this application.

The transceiver 213 may be configured to support signal receiving or sending between the generation device of the device-cloud collaboration content and the receiving device of the device-cloud collaboration content, and the transceiver 213 may be connected to the antenna 215. The transceiver 213 includes a transmitter Tx and a receiver Rx. Specifically, the one or more antennas 215 may receive a signal. The receiver Rx of the transceiver 213 is configured to receive the signal from the antenna, convert the signal into data, and provide the data to the processor 211, so that the processor 211 further processes the data. In addition, the transmitter Tx in the transceiver 213 is further configured to receive modulated data from the processor 211, convert the modulated data into a signal, and send the signal through the one or more antennas 215.

The transceiver 213 may also be referred to as a transceiver unit, a transceiver machine, a transceiver apparatus, or the like. Optionally, a device that is in the transceiver unit and that is configured to implement a receiving function may be considered as a receiving unit, and a device that is in the transceiver unit and that is configured to implement a sending function may be considered as a sending unit. In other words, the transceiver unit includes the receiving unit and the sending unit. The receiving unit may also be referred to as a receiver, an input port, a receiving circuit, or the like. The sending unit may be referred to as a transmitter, a transmitter machine, a transmitter circuit, or the like.

It may be understood that the structure shown in this embodiment of this application does not constitute a specific limitation on the generation device of the device-cloud collaboration content. In some other embodiments of this application, the generation device of the device-cloud collaboration content may include more or fewer components than those shown in the figure, or a combination of a part of the components, or splits from a part of the components, or an arrangement of different components. The components shown in the figure may be implemented by hardware, software, or a combination of software and hardware.

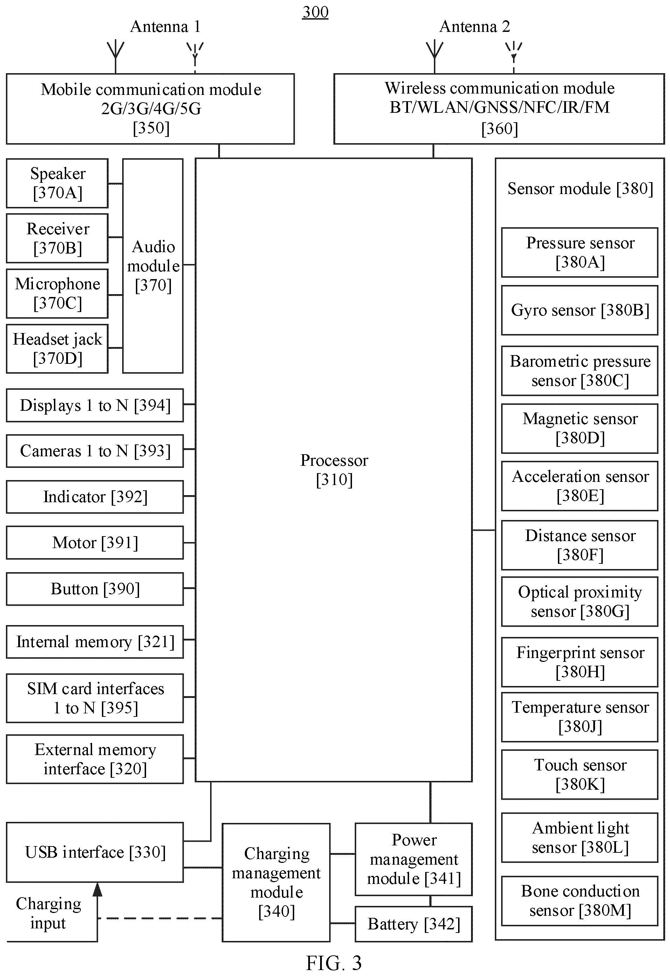

FIG. 3 is a diagram of a structure of a receiving device 300 of device-cloud collaboration content according to this application. It should be understood that the receiving device 300 of the device-cloud collaboration content shown in FIG. 3 is merely an example, and the receiving device 300 of the device-cloud collaboration content may have more or fewer components than those shown in the figure, or a combination of two or more components, or an arrangement of different components. Various components shown in FIG. 3 may be implemented in hardware including one or more signal processing circuits and/or application-specific integrated circuits, software, or a combination of hardware and software. The device may be, for example, user equipment like a mobile phone or a tablet.

For example, the receiving device 300 of the device-cloud collaboration content may include a processor 310, an external memory interface 320, an internal memory 321, a universal serial bus (universal serial bus, USB) interface 330, a charging management module 340, a power management module 341, a battery 342, an antenna 1, an antenna 2, a mobile communication module 350, a wireless communication module 360, an audio module 370, a speaker 370A, a receiver 370B, a microphone 370C, a headset jack 370D, a sensor module 380, a button 390, a motor 391, an indicator 392, a camera 393, a display 394, and a subscriber identity module (subscriber identification module, SIM) card interface 395. The sensor module 380 may include a pressure sensor 380A, a gyro sensor 380B, a barometric pressure sensor 380C, a magnetic sensor 380D, an acceleration sensor 380E, a distance sensor 380F, an optical proximity sensor 380G, a fingerprint sensor 380H, a temperature sensor 380J, a touch sensor 380K, an ambient light sensor 380L, a bone conduction sensor 380M, and the like.

The processor 310 may include one or more processing units. For example, the processor 310 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent devices, or may be integrated into one or more processors.

The controller may be a nerve center and a command center of the receiving device 300 of the device-cloud collaboration content. The controller may generate an operation control signal based on an instruction operation code and a time sequence signal, to complete control of instruction fetching and instruction execution.

The memory may be further disposed in the processor 310, and is configured to store instructions and data. In some embodiments, the memory in the processor 310 is a cache. The memory may store instructions or data just used or cyclically used by the processor 310. If the processor 310 needs to use the instructions or the data again, the processor may directly invoke the instructions or the data from the memory. This avoids repeated access, and reduces waiting time of the processor 310, to improve system efficiency.

In some embodiments, the processor 310 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (serial clock line, SCL). In some embodiments, the processor 310 may include a plurality of groups of I2C buses. The processor 310 may be coupled to the touch sensor 380K, a charger, a flash, the camera 393, and the like through different I2C bus interfaces. For example, the processor 310 may be coupled to the touch sensor 380K through the I2C interface, so that the processor 310 communicates with the touch sensor 380K through the I2C bus interface, to implement a touch function of the receiving device 300 of the device-cloud collaboration content.

The I2S interface may be configured to perform audio communication. In some embodiments, the processor 310 may include a plurality of groups of I2S buses. The processor 310 may be coupled to the audio module 370 through the I2S bus, to implement communication between the processor 310 and the audio module 370. In some embodiments, the audio module 370 may transmit an audio signal to the wireless communication module 360 through the I2S interface, to implement a function of answering a call through a Bluetooth headset.

The PCM interface may also be configured to perform audio communication, and sample, quantize, and encode an analog signal. In some embodiments, the audio module 370 may be coupled to the wireless communication module 360 through the PCM bus interface. In some embodiments, the audio module 370 may alternatively transmit an audio signal to the wireless communication module 360 through the PCM interface, to implement a function of answering a call through a Bluetooth headset. Both the I2S interface and the PCM interface may be used for audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 310 and the wireless communication module 360. For example, the processor 310 communicates with a Bluetooth module in the wireless communication module 360 through the UART interface, to implement a Bluetooth function. In some embodiments, the audio module 370 may transmit an audio signal to the wireless communication module 360 through the UART interface, to implement a function of playing music through a Bluetooth headset.

The MIPI interface may be configured to connect the processor 310 to a peripheral device, for example, the display 394 or the camera 393. The MIPI interface includes a camera serial interface (camera serial interface, CSI), a display serial interface (display serial interface, DSI), and the like. In some embodiments, the processor 310 communicates with the camera 393 through the CSI interface, to implement a photographing function of the receiving device 300 of the device-cloud collaboration content. The processor 310 communicates with the display 394 through the DSI interface, to implement a display function of the receiving device 300 of the device-cloud collaboration content.

The GPIO interface may be configured by software. The GPIO interface may be configured as a control signal or a data signal. In some embodiments, the GPIO interface may be configured to connect the processor 310 to the camera 393, the display 394, the wireless communication module 360, the audio module 370, the sensor module 380, and the like. The GPIO interface may alternatively be configured as an I2C interface, an I2S interface, a UART interface, an MIPI interface, or the like.

The USB interface 330 is an interface that conforms to a USB standard specification, and may be specifically a mini USB interface, a micro USB interface, a USB type-C interface, or the like. The USB interface 330 may be configured to connect a charger to charge the receiving device 300 of the device-cloud collaboration content, or may be configured to transmit data between the receiving device 300 of the device-cloud collaboration content and a peripheral device, or may be configured to connect to a headset for playing audio through the headset. Alternatively, the interface may be configured to connect to another user equipment, for example, an AR device.

It may be understood that an interface connection relationship between the modules illustrated in embodiments of this application is merely an example for description, and does not constitute a limitation on the structure of the receiving device 300 of the device-cloud collaboration content. In some other embodiments of this application, the receiving device 300 of the device-cloud collaboration content may alternatively use an interface connection manner different from that in the foregoing embodiment, or use a combination of a plurality of interface connection manners.

The charging management module 340 is configured to receive a charging input from a charger. The charger may be a wireless charger or a wired charger. In some embodiments of wired charging, the charging management module 340 may receive a charging input of the wired charger through the USB interface 330. In some embodiments of wireless charging, the charging management module 340 may receive a wireless charging input through a wireless charging coil of the receiving device 300 of the device-cloud collaboration content. The charging management module 340 may further supply power to the user equipment through the power management module 341 while charging the battery 342.

The power management module 341 is configured to connect the battery 342, the charging management module 340, and the processor 310. The power management module 341 receives inputs of the battery 342 and/or the charging management module 340, to supply power to the processor 310, the internal memory 321, an external memory, the display 394, the camera 393, the wireless communication module 360, and the like. The power management module 341 may be further configured to monitor a parameter such as a battery capacity, a battery cycle count, or a battery health status (electric leakage or impedance). In some other embodiments, the power management module 341 may alternatively be disposed in the processor 310. In some other embodiments, the power management module 341 and the charging management module 340 may alternatively be disposed in a same device.

A wireless communication function of the receiving device 300 of the device-cloud collaboration content may be implemented through the antenna 1, the antenna 2, the mobile communication module 350, the wireless communication module 360, the modem processor, the baseband processor, and the like.

The antenna 1 and the antenna 2 are configured to transmit and receive an electromagnetic wave signal. Each antenna in the receiving device 300 of the device-cloud collaboration content may be configured to cover one or more communication frequency bands. Different antennas may be further multiplexed, to improve antenna utilization. For example, the antenna 1 may be multiplexed as a diversity antenna in a wireless local area network. In some other embodiments, the antenna may be used in combination with a tuning switch.

The mobile communication module 350 may provide a wireless communication solution that is applied to the receiving device 300 of the device-cloud collaboration content and that is used for 2G, 3G, 4G, 5G, and the like. The mobile communication module 350 may include at least one filter, a switch, a power amplifier, a low noise amplifier (low noise amplifier, LNA), and the like. The mobile communication module 350 may receive an electromagnetic wave through the antenna 1, perform processing such as filtering or amplification on the received electromagnetic wave, and transmit the electromagnetic wave to the modem processor for demodulation. The mobile communication module 350 may further amplify a signal modulated by the modem processor, and convert the signal into an electromagnetic wave for radiation through the antenna 1. In some embodiments, at least some functional modules in the mobile communication module 350 may be disposed in the processor 310. In some embodiments, at least some functional modules in the mobile communication module 350 may be disposed in a same device as at least some modules in the processor 310.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (which is not limited to the speaker 370A, the receiver 370B, or the like), or displays an image or a video through the display 394. In some embodiments, the modem processor may be an independent device. In some other embodiments, the modem processor may be independent of the processor 310, and is disposed in a same component as the mobile communication module 350 or another functional module.

The wireless communication module 360 may provide a wireless communication solution that is applied to the receiving device 300 of the device-cloud collaboration content and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 360 may be one or more devices integrating at least one communication processor module. The wireless communication module 360 receives an electromagnetic wave through the antenna 2, performs frequency modulation and filtering processing on an electromagnetic wave signal, and sends a processed signal to the processor 310. The wireless communication module 360 may further receive a to-be-sent signal from the processor 310, perform frequency modulation and amplification on the signal, and convert the signal into an electromagnetic wave for radiation through the antenna 2.

In some embodiments, the antenna 1 and the mobile communication module 350 in the receiving device 300 of the device-cloud collaboration content are coupled, and the antenna 2 and the wireless communication module 360 in the receiving device 300 of the device-cloud collaboration content are coupled, so that the receiving device 300 of the device-cloud collaboration content can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The receiving device 300 of the device-cloud collaboration content implements a display function by using the GPU, the display 394, the application processor, and the like. The GPU is a microprocessor for image processing, and is connected to the display 394 and the application processor. The GPU is configured to perform mathematical and geometric calculations, and is configured for graphics rendering. The processor 310 may include one or more GPUs, and the one or more GPUs execute program instructions to generate or change display information.

The display 394 is configured to display an image, a video, or the like. The display 394 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a mini-LED, a micro-LED, a micro-OLED, a quantum dot light emitting diode (quantum dot light emitting diode, QLED), or the like. In some embodiments, the receiving device 300 of the device-cloud collaboration content may include one or N displays 394, where N is a positive integer greater than 1.

The receiving device 300 of the device-cloud collaboration content may implement a photographing function through the camera 393, the ISP, the video codec, the GPU, the display 394, the application processor, and the like.

The ISP is configured to process data fed back by the camera 393. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scene. In some embodiments, the ISP may be disposed in the camera 393.

The camera 393 is configured to capture a still image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format, for example, RGB or YUV. In some embodiments, the receiving device 300 of the device-cloud collaboration content may include one or N cameras 393, where N is a positive integer greater than 1.

The digital signal processor is configured to process a digital signal, and may further process another digital signal in addition to a digital image signal. For example, when the receiving device 300 of the device-cloud collaboration content selects a frequency, the digital signal processor is configured to perform Fourier transformation on frequency energy.

The video codec is configured to compress or decompress a digital video. The receiving device 300 of the device-cloud collaboration content may support one or more video codecs. Therefore, the receiving device 300 of the device-cloud collaboration content may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor, and quickly processes input information with reference to a structure of a biological neural network, for example, a transfer mode between human brain neurons, and may further continuously perform self-learning. Applications such as intelligent cognition of the receiving device 300 of the device-cloud collaboration content may be implemented through the NPU, for example, image recognition, facial recognition, speech recognition, and text understanding.

The external memory interface 320 may be configured to connect to an external memory card, for example, a micro SD card, to extend a storage capability of the receiving device 300 of the device-cloud collaboration content. The external memory card communicates with the processor 310 through the external memory interface 320, to implement a data storage function. For example, files such as music and videos are stored in the external storage card.

The internal memory 321 may be configured to store computer executable program code, where the executable program code includes instructions. The processor 310 runs the instructions stored in the internal memory 321, to perform various function applications and data processing of the receiving device 300 of the device-cloud collaboration content. The internal memory 321 may include a program storage area and a data storage area. The program storage area may store an operating system, an application required by at least one function (for example, a sound playing function or an image playing function), and the like. The data storage area may store data (such as audio data and a phone book) created during use of the receiving device 300 of the device-cloud collaboration content, and the like. In addition, the internal memory 321 may include a high-speed random access memory, or may include a nonvolatile memory, for example, at least one magnetic disk storage device, a flash storage device, or a universal flash storage (universal flash storage, UFS).

The receiving device 300 of the device-cloud collaboration content may implement an audio function, for example, music playing and recording, by using the audio module 370, the speaker 370A, the receiver 370B, the microphone 370C, the headset jack 370D, the application processor, and the like.

The audio module 370 is configured to convert digital audio information into an analog audio signal output, and is further configured to convert an analog audio input into a digital audio signal. The audio module 370 may be further configured to encode and decode an audio signal. In some embodiments, the audio module 370 may be disposed in the processor 310, or some functional modules of the audio module 370 are disposed in the processor 310.

The speaker 370A, also referred to as a "loudspeaker", is configured to convert an audio electrical signal into a sound signal. The receiving device 300 of the device-cloud collaboration content may listen to music or listen to a hands-free call by using the speaker 370A.

The receiver 370B, also referred to as an "earpiece", is configured to convert an audio electrical signal into a sound signal. When a call is answered or voice information is received by using the receiving device 300 of the device-cloud collaboration content, the receiver 370B may be put close to a human ear to listen to a voice.

The microphone 370C, also referred to as a "mike" or a "mic", is configured to convert a sound signal into an electrical signal. When making a call or sending voice information, the user may make a sound near the microphone 370C through the mouth of the user, to input a sound signal to the microphone 370C. At least one microphone 370C may be disposed in the receiving device 300 of the device-cloud collaboration content. In some other embodiments, two microphones 370C may be disposed in the receiving device 300 of the device-cloud collaboration content, to collect a sound signal and implement a noise reduction function. In some other embodiments, three, four, or more microphones 370C may alternatively be disposed in the receiving device 300 of the device-cloud collaboration content, to collect a sound signal, implement noise reduction, identify a sound source, implement a directional recording function, and the like.

The headset jack 370D is configured to connect to a wired headset. The headset jack 370D may be the USB interface 330, or may be a 3.5 mm open mobile terminal platform (open mobile terminal platform, OMTP) standard interface, or a cellular telecommunications industry association of the USA (cellular telecommunications industry association of the USA, CTIA) standard interface.

The pressure sensor 380A is configured to sense a pressure signal, and may convert the pressure signal into an electrical signal. In some embodiments, the pressure sensor 380A may be disposed on the display 394. There are a plurality of types of pressure sensors 380A such as a resistive pressure sensor, an inductive pressure sensor, and a capacitive pressure sensor. The capacitive pressure sensor may include at least two parallel plates made of conductive materials. When a force is applied to the pressure sensor 380A, capacitance between electrodes changes. The receiving device 300 of the device-cloud collaboration content determines pressure intensity based on a capacitance change. When a touch operation is performed on the display 394, the receiving device 300 of the device-cloud collaboration content detects intensity of the touch operation through the pressure sensor 380A. The receiving device 300 of the device-cloud collaboration content may also calculate a touch location based on a detection signal of the pressure sensor 380A. In some embodiments, touch operations that are performed in a same touch location but have different touch operation intensity may correspond to different operation instructions. For example, when a touch operation whose touch operation intensity is less than a first pressure threshold is performed on an SMS message application icon, an instruction for viewing an SMS message is performed. When a touch operation whose touch operation intensity is greater than or equal to the first pressure threshold is performed on the SMS message application icon, an instruction for creating an SMS message is performed.

The gyro sensor 380B may be configured to determine a motion posture of the receiving device 300 of the device-cloud collaboration content. In some embodiments, an angular velocity of the receiving device 300 of the device-cloud collaboration content around three axes (that is, axes x, y, and z) may be determined by using the gyro sensor 380B. The gyro sensor 380B may be configured to implement image stabilization during photographing. For example, when the shutter is pressed, the gyro sensor 380B detects an angle at which the receiving device 300 of the device-cloud collaboration content jitters, calculates, based on the angle, a distance for which a lens module needs to compensate, and allows the lens to cancel the jitter of the receiving device 300 of the device-cloud collaboration content through reverse motion, to implement image stabilization. The gyro sensor 380B may also be used in a navigation scenario and a motion-controlled gaming scenario.

The barometric pressure sensor 380C is configured to measure barometric pressure. In some embodiments, the receiving device 300 of the device-cloud collaboration content calculates an altitude by using a barometric pressure value measured by the barometric pressure sensor 380C, to assist in positioning and navigation.

The magnetic sensor 380D includes a Hall effect sensor. The receiving device 300 of the device-cloud collaboration content may detect opening and closing of a flip cover by using the magnetic sensor 380D. In some embodiments, when the receiving device 300 of the device-cloud collaboration content is a flip phone, the receiving device 300 of the device-cloud collaboration content may detect opening and closing of a flip cover based on the magnetic sensor 380D. Further, a feature such as automatic unlocking of the flip cover is set based on a detected opening or closing state of a leather cover or a detected opening or closing state of the flip cover.

The acceleration sensor 380E may detect magnitudes of accelerations of the receiving device 300 of the device-cloud collaboration content in various directions (usually along the three axes). When the receiving device 300 of the device-cloud collaboration content is still, a magnitude and a direction of gravity may be detected. The acceleration sensor 380E may be further configured to identify a posture of the user equipment, and is used in an application such as switching between a landscape mode and a portrait mode or a pedometer.

The distance sensor 380F is configured to measure a distance. The receiving device 300 of the device-cloud collaboration content may measure a distance in an infrared manner or a laser manner. In some embodiments, in a photographing scene, the receiving device 300 of the device-cloud collaboration content may measure a distance by using the distance sensor 380F, to implement quick focusing.

The optical proximity sensor 380G may include, for example, a light-emitting diode (LED) and an optical detector such as a photodiode. The light-emitting diode may be an infrared light-emitting diode. The receiving device 300 of the device-cloud collaboration content emits infrared light by using the light-emitting diode. The receiving device 300 of the device-cloud collaboration content detects infrared reflected light from a nearby object by using the photodiode. When sufficient reflected light is detected, it may be determined that there is an object near the receiving device 300 of the device-cloud collaboration content. When insufficient reflected light is detected, the receiving device 300 of the device-cloud collaboration content may determine that there is no object near the receiving device 300 of the device-cloud collaboration content. The receiving device 300 of the device-cloud collaboration content may detect, by using the optical proximity sensor 380G, that a user holds the receiving device 300 of the device-cloud collaboration content close to an ear for a call, to automatically perform screen-off for power saving. The optical proximity sensor 380G may also be used in a smart cover mode or a pocket mode to automatically perform screen unlocking or locking.

The ambient light sensor 380L is configured to sense ambient light brightness. The receiving device 300 of the device-cloud collaboration content may adaptively adjust brightness of the display 394 based on the sensed ambient light brightness. The ambient light sensor 380L may also be configured to automatically adjust white balance during photographing. The ambient light sensor 380L may further cooperate with the optical proximity sensor 380G to detect whether the receiving device 300 of the device-cloud collaboration content is in a pocket, to avoid an accidental touch.

The fingerprint sensor 380H is configured to collect a fingerprint. The receiving device 300 of the device-cloud collaboration content may use a feature of the collected fingerprint to implement fingerprint-based unlocking, application lock access, fingerprint-based photographing, fingerprint-based call answering, and the like.

The temperature sensor 380J is configured to detect a temperature. In some embodiments, the receiving device 300 of the device-cloud collaboration content executes a temperature processing strategy based on the temperature detected by the temperature sensor 380J. For example, when the temperature reported by the temperature sensor 380J exceeds a threshold, the receiving device 300 of the device-cloud collaboration content lowers performance of a processor near the temperature sensor 380J, to reduce power consumption for thermal protection. In some other embodiments, when the temperature is lower than another threshold, the receiving device 300 of the device-cloud collaboration content heats the battery 342, to avoid abnormal shutdown of the receiving device 300 of the device-cloud collaboration content due to a low temperature. In some other embodiments, when the temperature is less than still another threshold, the receiving device 300 of the device-cloud collaboration content boosts an output voltage of the battery 342, to avoid abnormal shutdown due to a low temperature.

The touch sensor 380K may also be referred to as a "touch panel". The touch sensor 380K may be disposed on the display 394, and the touch sensor 380K and the display 394 form a touchscreen, which is also referred to as a "touchscreen". The touch sensor 380K is configured to detect a touch operation on or near the touch sensor 380K. The touch sensor may transfer the detected touch operation to the application processor, to determine a type of the touch event. A visual output related to the touch operation may be provided on the display 394. In some other embodiments, the touch sensor 380K may alternatively be disposed on a surface of the receiving device 300 of the device-cloud collaboration content at a location different from that of the display 394.

The bone conduction sensor 380M may obtain a vibration signal. In some embodiments, the bone conduction sensor 380M may obtain a vibration signal of a vibration bone of a human vocal-cord part. The bone conduction sensor 380M may also be in contact with a human pulse, to receive a blood pressure beating signal. In some embodiments, the bone conduction sensor 380M may alternatively be disposed in the headset, to obtain a bone conduction headset. The audio module 370 may obtain a voice signal through parsing based on the vibration signal that is of the vibration bone of the vocal-cord part and that is obtained by the bone conduction sensor 380M, to implement a voice function. The application processor may parse heart rate information based on the blood pressure beating signal obtained by the bone conduction sensor 380M, to implement a heart rate detection function.

The button 390 includes a power button, a volume button, and the like. The button 390 may be a mechanical button, or may be a touch button. The receiving device 300 of the device-cloud collaboration content may receive a button input, and generate a button signal input related to user setting and function control of the receiving device 300 of the device-cloud collaboration content.

The motor 391 may generate a vibration prompt. The motor 391 may be configured to provide an incoming call vibration prompt and touch vibration feedback. For example, touch operations performed on different applications (for example, photographing and audio play) may correspond to different vibration feedback effect. For touch operations performed on different areas of the display 394, the motor 391 may also correspond to different vibration feedback effect. Different application scenarios (for example, a time reminder, information receiving, an alarm clock, and a game) may also correspond to different vibration feedback effect. Touch vibration feedback effect may be further customized.

The indicator 392 may be an indicator light, and may be configured to indicate a charging status and a power change, or may be configured to indicate a message, a missed call, a notification, and the like.

The SIM card interface 395 is configured to connect to a SIM card. The SIM card may be inserted into the SIM card interface 395 or detached from the SIM card interface 395, to implement contact with or separation from the receiving device 300 of the device-cloud collaboration content. The receiving device 300 of the device-cloud collaboration content can support one or N SIM card interfaces, where N is a positive integer greater than 1. The SIM card interface 395 may support a nano-SIM card, a micro-SIM card, a SIM card, and the like. A plurality of cards may be simultaneously inserted into a same SIM card interface 395. The plurality of cards may be of a same type or different types. The SIM card interface 395 is compatible with different types of SIM cards. The SIM card interface 395 is also compatible with an external memory card. The receiving device 300 of the device-cloud collaboration content interacts with a network by using the SIM card, to implement functions such as conversation and data communication. In some embodiments, the receiving device 300 of the device-cloud collaboration content uses an eSIM, namely, an embedded SIM card. The eSIM card may be embedded in the receiving device 300 of the device-cloud collaboration content, and cannot be separated from the receiving device 300 of the device-cloud collaboration content.

It may be understood that the structure shown in embodiments of this application does not constitute a specific limitation on a device on a device side. In some other embodiments of this application, the device on the device side may include more or fewer components than those shown in the figure, or a combination of a part of the components, or splits from a part of the components, or an arrangement of different components. The components shown in the figure may be implemented by hardware, software, or a combination of software and hardware.

The foregoing embodiment describes a running scenario of the device-cloud collaboration content. Before the device-cloud collaboration content is run, editing the device-cloud collaboration content is one of the most important phases in device-cloud collaboration content development. This application provides a method for previewing device-cloud collaboration content. This can simplify an editing process, help a user improve editing efficiency, and reduce labor intensity.

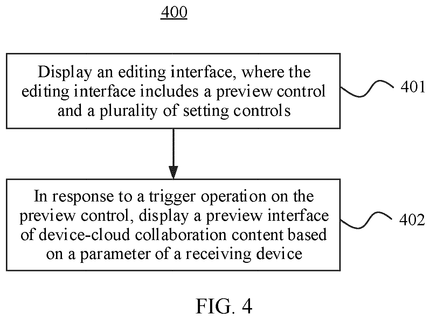

Based on this, FIG. 4 is a flowchart of a process 400 of a method for previewing device-cloud collaboration content according to this application. As shown in FIG. 4, the process 400 may be performed by a generation device of the device-cloud collaboration content (which may be referred to as a generation device for short), to implement device-cloud collaboration content editing and preview. The process 400 is described as a series of steps or operations. It should be understood that the process 400 may be executed in various sequences and/or simultaneously, and is not limited to an execution sequence shown in FIG. 4. The process 400 includes the following steps.

Step 401: Display an editing interface, where the editing interface includes a preview control and a plurality of setting controls.

The plurality of setting controls are used to set parameters related to the device-cloud collaboration content. In this embodiment of this application, the parameters related to the device-cloud collaboration content may include:

### (1) Parameter of a receiving device of the device-cloud collaboration content

The parameter is used to simulate a running environment of the receiving device, for example, may include but is not limited to: a type of the receiving device, a model of the receiving device, a chip model of the receiving device, a battery level of the receiving device, resolution of the receiving device, a volume of the receiving device, and an ambient temperature of the receiving device. The receiving device may be simulated on the generation device based on the foregoing parameters, so that even if no actual receiving device is used, a virtual receiving device may be constructed on the generation device based on an attribute of the receiving device. In this way, the generation device may edit and generate the device-cloud collaboration content, and may further simulate the receiving device to present the foregoing edited and generated device-cloud collaboration content to a user, so that the user can quickly and intuitively preview editing effect.

### (2) Coding parameter

The coding parameter is used to implement encoding processing on the device-cloud collaboration content to obtain a bitstream, or implement decoding processing on the bitstream to reconstruct the device-cloud collaboration content. For example, the coding parameter may include but is not limited to a video encoder/decoder parameter and an audio encoder/decoder parameter. For the device-cloud collaboration content, refer to a video/an audio encoding/decoding method. Therefore, a plurality of encoding/decoding parameters are involved. The generation device may encode the device-cloud collaboration content based on the encoding parameter to obtain the bitstream, and the receiving device may decode the bitstream based on the coding parameter to obtain reconstructed device-cloud collaboration content.

### (3) Transmission parameter

The transmission parameter is used to simulate a status and an environment of bitstream transmission, for example, may include but is not limited to a sending/receiving frame rate, a maximum sending/receiving bit rate, a network delay, network fluctuation, a physical distance, a physical location, and a transmission channel. The bitstream obtained by encoding the device-cloud collaboration content needs to be transmitted from the generation device to the receiving device. To adapt to a situation of a network or another transmission medium, parameters sent by the generation device and received by the receiving device may be configured based on the foregoing parameters. In addition, a situation faced when the bitstream is transmitted from the generation device to the receiving device or in the network or on the another transmission medium is simulated, to construct a change caused by the foregoing situation when the bitstream arrives at the receiving device.

### (4) Instance attribute parameter of the device-cloud collaboration content

The instance attribute parameter of the device-cloud collaboration content is used to generate the device-cloud collaboration content, for example, may include but is not limited to a location, a proportion, rotation, effect strength, and a weight of an instance of the device-cloud collaboration content. These parameters are associated with rendering, image quality, and the like of the device-cloud collaboration content, and may have most direct impact on presentation effect of the receiving device. Changing one or more parameter values may result in a change in the presentation effect of the receiving device.

In this embodiment of this application, the plurality of setting controls included in the editing interface correspond to the plurality of parameters, and the user may change, by operating the setting controls, parameter values corresponding to the setting controls.

In a possible implementation, the editing interface may include a plurality of windows.

A first window may correspond to a parameter of the receiving device of the device-cloud collaboration content. The first window may include a plurality of controls, and the plurality of controls correspond to parameters of the receiving device. For example, the plurality of controls each are used to set a type of the receiving device, a model of the receiving device, a chip model of the receiving device, a battery level of the receiving device, resolution of the receiving device, a volume of the receiving device, and an ambient temperature of the receiving device.

A second window may correspond to a coding parameter. The second window may include a plurality of controls, and the plurality of controls correspond to coding parameters. For example, the plurality of controls each are used to set a video encoder/decoder parameter and an audio encoder/decoder parameter.

A third window may correspond to a transmission parameter. The third window may include a plurality of controls, and the plurality of controls correspond to transmission parameters. For example, the plurality of controls each are used to set a sending/receiving frame rate, a maximum sending/receiving bit rate, a network delay, network fluctuation, a physical distance, a physical location, and a transmission channel.

A fourth window may correspond to an instance attribute parameter of the device-cloud collaboration content. The fourth window may include a plurality of controls, and the plurality of controls correspond to instance attribute parameters of the device-cloud collaboration content. For example, the plurality of controls each are used to set a location, a proportion, rotation, effect strength, a weight, and the like of an instance of the device-cloud collaboration content.

It should be noted that the foregoing four windows do not constitute a limitation on the editing interface. The editing interface in this application may include fewer or more windows. This is associated with an editing requirement of the device-cloud collaboration content. A quantity of windows and content are not specifically limited in this application. In addition, a control included in each window is not specifically limited either.

In a possible implementation, the editing interface may include a plurality of controls.

A first control may correspond to a parameter of the receiving device of the device-cloud collaboration content. The first control may include a plurality of subcontrols, and the plurality of subcontrols correspond to parameters of the receiving device. For example, the plurality of subcontrols each are used to set a type of the receiving device, a model of the receiving device, a chip model of the receiving device, a battery level of the receiving device, resolution of the receiving device, a volume of the receiving device, and an ambient temperature of the receiving device.

A second control may correspond to a coding parameter. The second control may include a plurality of subcontrols, and the plurality of subcontrols correspond to coding parameters. For example, the plurality of subcontrols each are used to set a video encoder/decoder parameter and an audio encoder/decoder parameter.

A third control may correspond to a transmission parameter. The third control may include a plurality of subcontrols, and the plurality of subcontrols correspond to transmission parameters. For example, the plurality of subcontrols each are used to set a sending/receiving frame rate, a maximum sending/receiving bit rate, a network delay, network fluctuation, a physical distance, a physical location, and a transmission channel.

A fourth control may correspond to an instance attribute parameter of the device-cloud collaboration content. The fourth control may include a plurality of subcontrols, and the plurality of subcontrols correspond to instance attribute parameters of the device-cloud collaboration content. For example, the plurality of subcontrols each are used to set a location, a proportion, rotation, effect strength, a weight, and the like of an instance of the device-cloud collaboration content.

It should be noted that the foregoing four controls do not constitute a limitation on the editing interface. The editing interface in this application may include fewer or more controls. This is associated with an editing requirement of the device-cloud collaboration content. A quantity of controls and content are not specifically limited in this application. In addition, a subcontrol included in each control is not specifically limited either.

The preview control may be used to trigger presentation of edited device-cloud collaboration content. The preview control may be presented in each window or each control. This is not specifically limited.

Step 402: In response to a trigger operation on the preview control, display a preview interface based on the parameter of the receiving device.

The preview interface is used to simulate an interface for displaying the device-cloud collaboration content on the receiving device.

As described above, the editing interface displays a plurality of setting controls. Based on this, the user may perform an operation on the plurality of setting controls in the editing interface, for example, tap a control, input a text/a number, or drag a slider, to modify a value of a parameter corresponding to a setting control. After the user modifies values of the one or more parameters, the user may preview, in time, impact generated by modifying the device-cloud collaboration content and effect generated therefrom, that is, trigger the preview control in the editing interface.

In this embodiment of this application, the generation device may first obtain the device-cloud collaboration content; simulate a transmission condition based on the transmission parameter, to simulate the device-cloud collaboration content received on the receiving device; simulate the receiving device based on the parameter of the receiving device of the device-cloud collaboration content to process the received device-cloud collaboration content, to simulate the device-cloud collaboration content obtained by the receiving device; and further display the device-cloud collaboration content in the preview interface.

Obtaining the device-cloud collaboration content may include: editing content of the device-cloud collaboration content in advance based on a requirement of the device-cloud collaboration content. This operation does not involve transmission or presentation. Therefore, the device-cloud collaboration content may be edited in advance and then stored. Subsequent tests may be performed only for performance of transmission and receiving devices. Alternatively, the device-cloud collaboration content is obtained from a preset file. That is, the user edits the content of the device-cloud collaboration content in advance based on the requirement of the device-cloud collaboration content, and stores the content in a form of a file; or generates the device-cloud collaboration content based on the instance attribute parameter of the device-cloud collaboration content. In other words, in the editing process, the user may edit the content while testing the performance of the transmission and receiving devices.

As described above, based on the transmission parameter, the situation faced when the bitstream is transmitted from the generation device to the receiving device or in the network or on another medium may be simulated, to construct the change caused by the impact of the foregoing situation when the bitstream arrives at the receiving device. Therefore, even if the generation device does not actually transmit the bitstream, the generation device may still construct a virtual transmission path, to simulate data received by the receiving device after the bitstream is transmitted on the virtual transmission path.

The generation device may obtain the receiving device through simulation based on the parameter of the receiving device of the device-cloud collaboration content, so that even if no actual receiving device is used, a virtual receiving device may be constructed on the generation device based on the attribute of the receiving device. Therefore, the generation device may simulate the receiving device to process the received data, to obtain the device-cloud collaboration content on the receiving device.

In a possible implementation, the generation device obtains the device-cloud collaboration content; encodes the device-cloud collaboration content based on the coding parameter to obtain the bitstream; sends the bitstream based on the transmission parameter; and simulates, based on the parameter of the receiving device of the device-cloud collaboration content, the receiving device to receive the bitstream; decodes the bitstream based on the coding parameter to simulate the device-cloud collaboration content received on the receiving device; and obtains display of the receiving device obtained through simulation, so that the device-cloud collaboration content is displayed in the preview interface.

In the foregoing process, a complete data processing process from the generation device to the receiving device may be simulated in more detail. To be specific, the generation device obtains the device-cloud collaboration content based on the instance attribute parameter of the device-cloud collaboration content, encodes the device-cloud collaboration content based on the coding parameter to obtain the bitstream, and then sends the bitstream based on the transmission parameter. In a bitstream transmission process, the generation device simulates a transmission environment, as if the bitstream is transmitted in a real environment. The receiving device (obtained by the generation device through simulation based on the parameter of the receiving device) receives the bitstream, decodes the bitstream based on the coding parameter, the attribute of the receiving device, the performance of the receiving device, and the like, and reconstructs the device-cloud collaboration content based on the instance attribute parameter of the device-cloud collaboration content.

The generation device simulates a virtual receiving device based on the parameter of the receiving device, and displays, to the user in a form of a preview interface, a content picture obtained under the foregoing parameter configuration. In this way, the user can quickly and intuitively see effect that can be presented on the receiving device under the foregoing configured parameters, so as to modify a corresponding parameter in time based on a requirement.

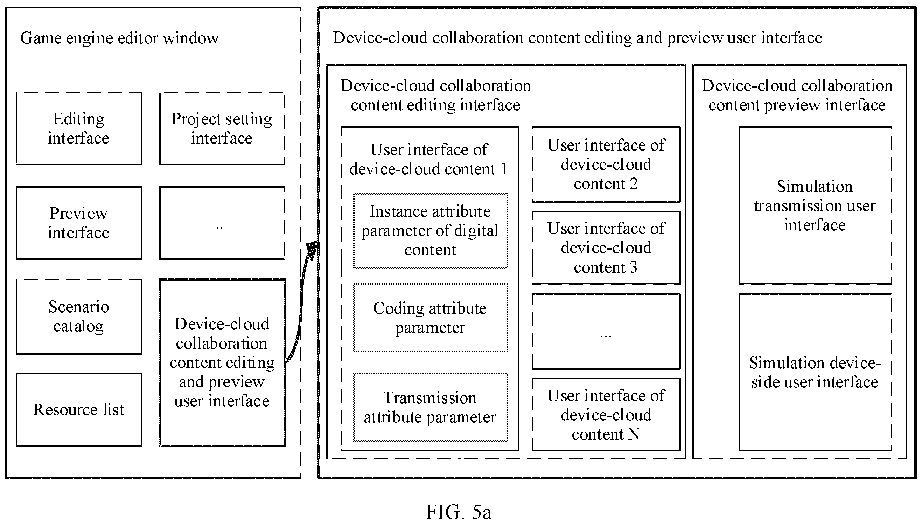

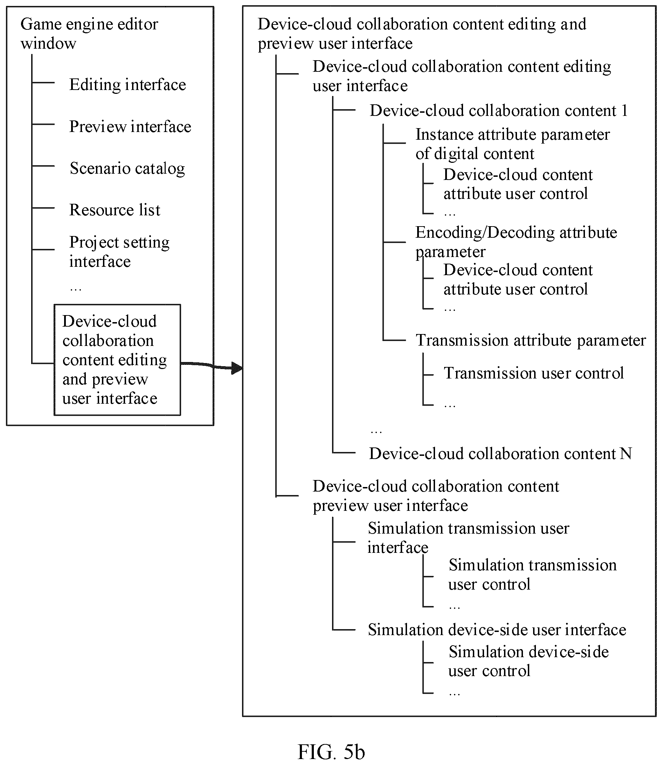

FIG. 5a and FIG. 5b each are a diagram of a device-cloud collaboration content editing and preview interface according to this application. As shown in FIG. 5a, editing a game engine is used as an example in this embodiment. Device-cloud collaboration content may be device-cloud collaboration content in a game. A game engine editor window (a left window) includes a control of the device-cloud collaboration content editing and preview user interface. After a user triggers the control, the device-cloud collaboration content editing and preview user interface (a right window, that is, the foregoing editing interface) is displayed. The interface includes a device-cloud collaboration content editing interface and a device-cloud collaboration content preview interface. The device-cloud collaboration content editing interface includes user interfaces of a plurality of pieces of device-cloud content. A user interface of device-cloud content 1 is used as an example, and includes controls of an instance attribute parameter, a coding parameter, and a transmission parameter of the device-cloud collaboration content. User interfaces of device-cloud content 2 to N may be completely the same as or not completely the same as the user interface of the device-cloud content 1. This is specifically subject to a requirement of the device-cloud content. This is not specifically limited. The device-cloud collaboration content preview interface includes controls (namely, the foregoing preview controls) in a simulation transmission user interface and a simulation device-side user interface. The user may trigger the foregoing control to display a corresponding preview interface.

As shown in FIG. 5b, editing a game engine is used as an example in this embodiment. Device-cloud collaboration content may be device-cloud collaboration content in a game. A game engine editor window (a left window) is displayed in a tree structure. The game engine editor window includes an option of a device-cloud collaboration content editing and preview user interface. After the user triggers the option, the device-cloud collaboration content editing and preview user interface (a right window, that is, the foregoing editing interface) is displayed. The interface includes a device-cloud collaboration content editing interface and a device-cloud collaboration content preview interface. The device-cloud collaboration content editing interface includes options of a plurality of device-cloud content. An option of device-cloud content 1 is used as an example, and includes an option of an instance attribute parameter, a coding parameter, and a transmission parameter of the device-cloud collaboration content. Options of device-cloud content 2 to N may be completely the same as or not completely the same as the option of the device-cloud content 1. This is specifically subject to a requirement of the device-cloud content. This is not specifically limited. The device-cloud collaboration content preview interface includes options (namely, the foregoing preview controls) in a simulation transmission user interface and a simulation device-side user interface. The user may trigger the foregoing control to display a corresponding preview interface.

It should be noted that FIG. 5a and FIG. 5b are merely two examples of the device-cloud collaboration content editing and preview interface, and do not constitute a limitation on a graphical user interface (Graphical User Interface, GUI) layout of the foregoing interfaces. This is not specifically limited in embodiments of this application either.

In this application, the generation device obtains the device-cloud collaboration content through editing based on a plurality of parameters configured by the user in the editing interface, simulates a transmission process of the device-cloud collaboration content, simulates the receiving device to process the received bitstream to obtain the device-cloud collaboration content on the receiving device, and displays the content picture under the foregoing configuration in the preview interface. This helps the user quickly understand the editing effect. The foregoing process is repeated for a plurality of times, to obtain final satisfactory effect and corresponding parameter configuration.

It can be learned that, in this application, the generation device completes an entire editing process of the device-cloud collaboration content by editing and simulating the receiving device, so that the user can autonomously modify the parameter configuration and quickly obtain a feedback, thereby simplifying the editing process, helping the user improve editing efficiency, and reducing labor intensity.

Specific embodiments are used below to describe in detail the technical solutions of this application.

### Embodiment 1

This embodiment is applied to scenarios including device-cloud collaboration content, which may include a production service scenario of a series of device-cloud collaboration technologies such as a device-cloud collaboration computer graphics motion vector (Computer Graphics Motion Vector, CGMV), device-cloud collaboration dynamic diffuse global illumination (Dynamic Diffusion Global Illumination, DDGI), device-cloud collaboration image-based lighting (Image-Based Lighting, IBL), device-cloud collaboration shadow mapping, and device-cloud collaboration object understanding and computing. Optionally, the method in this embodiment may be applied to an editor that is of a device-cloud collaboration game and that is deployed on a cloud side. The editor may display an editing interface and a preview interface. The editing interface includes a content editing interface and a simulation interface. The content editing interface may be used to edit an instance attribute parameter, a coding parameter, and a transmission parameter that are of the device-cloud collaboration content, and a parameter of a receiving device of the device-cloud collaboration content. The preview interface is used to present a picture of the device-cloud collaboration game.

The device-cloud collaboration technologies may be applied to one or more of game systems such as rendering, physical simulation, and skeletal animation. These device-cloud collaboration technologies have one instance, several instances, or no instance in a game scenario. In this embodiment, a device side is an electronic device, for example, a computer, a mobile phone, or a tablet. In this embodiment, network transmission is used.

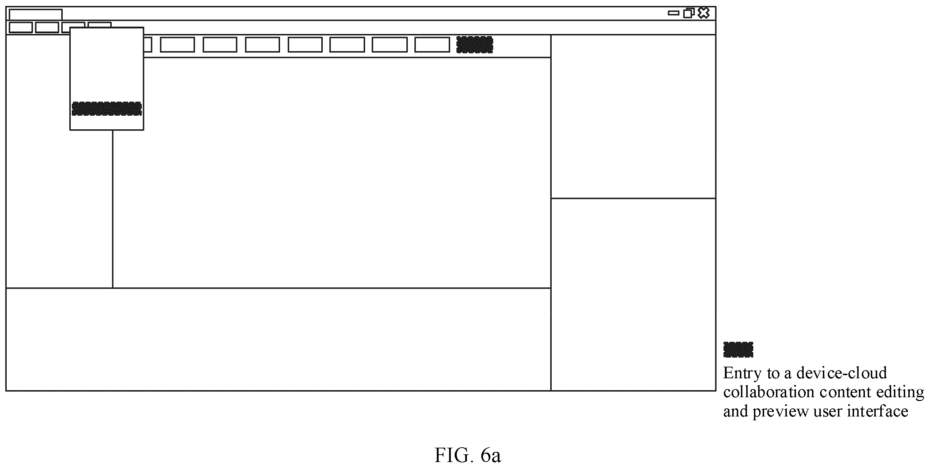

A procedure of this embodiment is as follows:
1. Display an entry to a device-cloud collaboration content editing and preview user interface in a game editor interface.
   For example, as shown in FIG. 6a (FIG. 6a is a diagram of the game editor interface), entries to the device-cloud collaboration content editing and preview user interface are displayed on the game editor interface.
2. Display the device-cloud collaboration content editing and preview user interface in response to a trigger operation of a user on the entry to the device-cloud collaboration content editing and preview user interface.

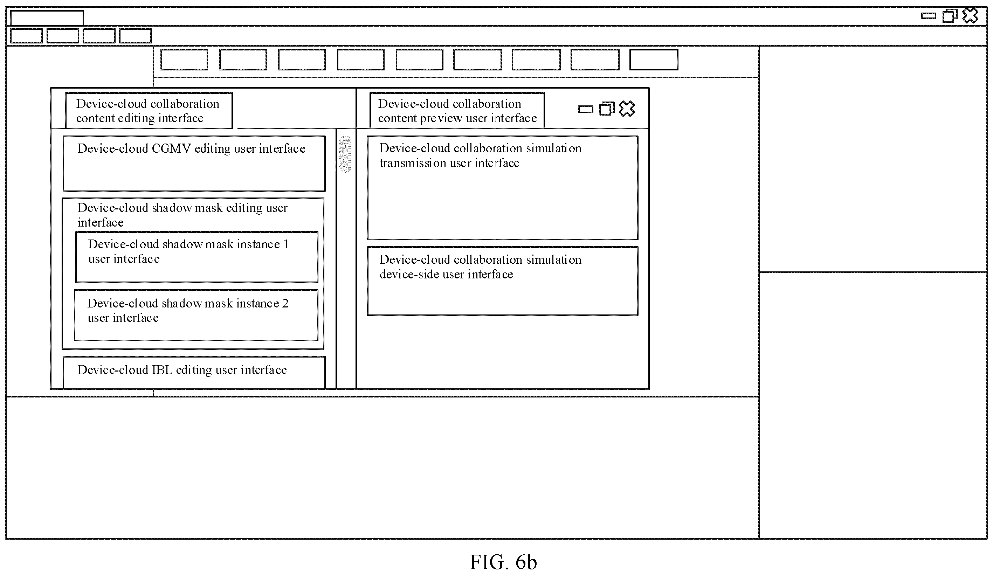

For example, as shown in FIG. 6b (FIG. 6b is a diagram of a device-cloud collaboration content editing and preview user interface), the device-cloud collaboration content editing and preview user interface includes a device-cloud collaboration content editing interface and a device-cloud collaboration content preview interface.
(a) The device-cloud collaboration content editing interface includes:
   i. a device-cloud CGMV editing user interface;
   ii. a device-cloud shadow mask editing user interface, which may further include a device-cloud shadow mask instance 1 user interface and a device-cloud shadow mask instance 2 user interface; and
   iii. a device-cloud IBL editing user interface.
(b) The device-cloud collaboration content preview interface includes:
   i. a device-cloud collaboration simulation transmission user interface; and
   ii. a device-cloud collaboration simulation device-side user interface.

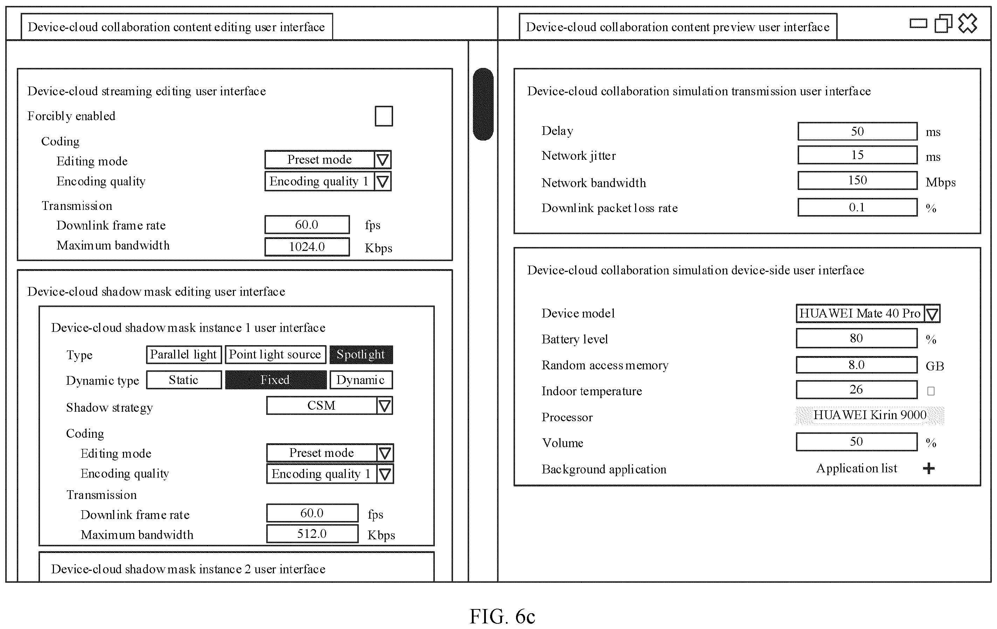

For example, as shown in FIG. 6c (FIG. 6c is a diagram of a device-cloud collaboration content editing and preview user interface), the device-cloud collaboration content editing interface includes a device-cloud streaming editing user interface and a device-cloud shadow mask editing user interface, the device-cloud streaming editing user interface and the device-cloud shadow mask editing user interface each include related settings of an instance attribute parameter, a coding parameter, and a transmission parameter of the device-cloud collaboration content. The device-cloud collaboration content preview interface includes the device-cloud collaboration simulation transmission user interface and the device-cloud collaboration simulation device-side user interface. The device-cloud collaboration simulation transmission user interface and the device-cloud collaboration simulation device-side user interface each include related settings of a parameter of a receiving device of device-cloud collaboration content.

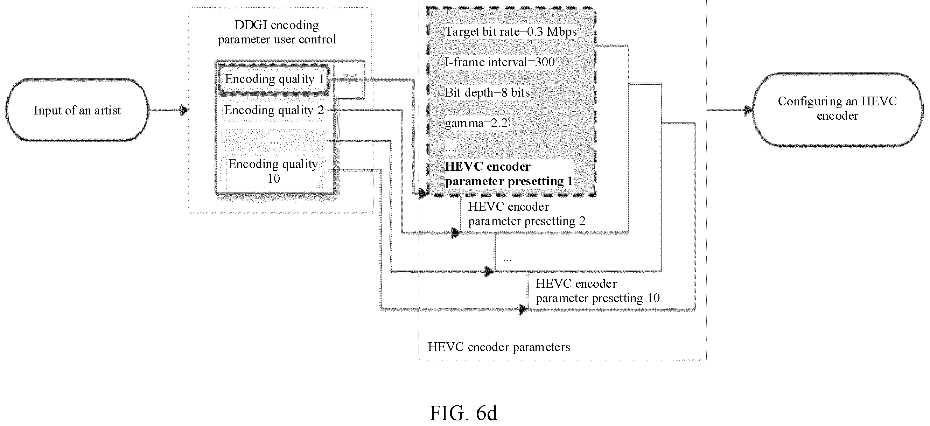

In this embodiment, mapping processing is performed on the foregoing parameters, to simplify parameters exposed to an artist and facilitate understanding of the artist. For example, as shown in FIG. 6d (FIG. 6d is a diagram of an editing interface in which a preset parameter is mapped to a user control). An encoding/decoding parameter control of the device-cloud collaboration DDGI is used as an example. A plurality of sets of encoder parameters are preset and mapped to a drop-down list control "Encoding quality". In this way, the artist only need to select an encoding quality level from the drop-down list based on a test case, and do not need to learn encoding knowledge.

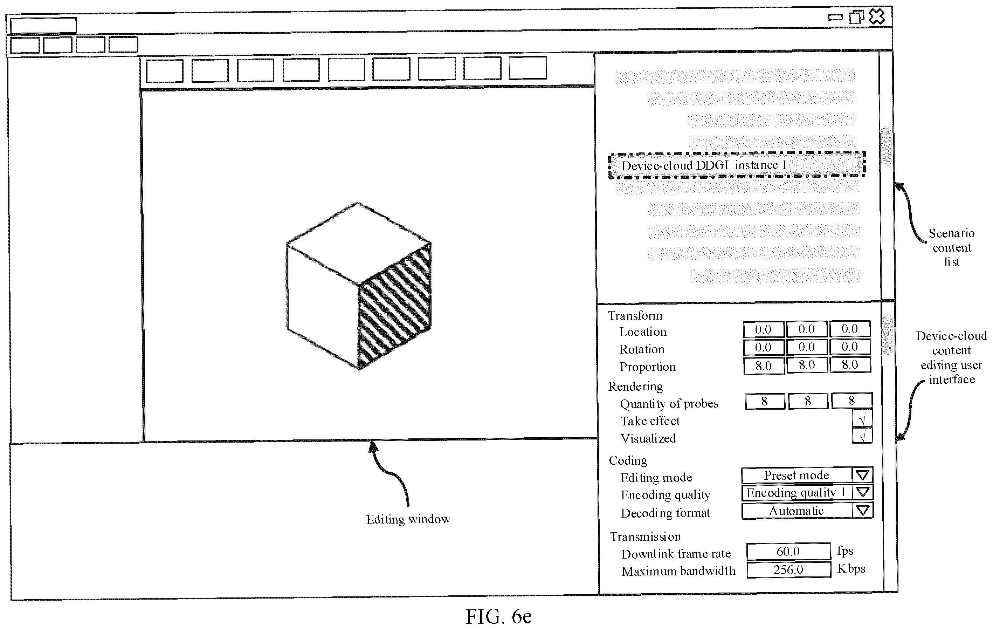

For example, as shown in FIG. 6e (FIG. 6e is a diagram of a game editor interface), the user selects the device-cloud DDGI_instance 1 for editing, and inputs a specific parameter value in a control corresponding to one or more of the instance attribute parameter (transformation and rendering), the coding parameter (encoding and decoding), and the transmission parameter (transmission) of the device-cloud collaboration content.

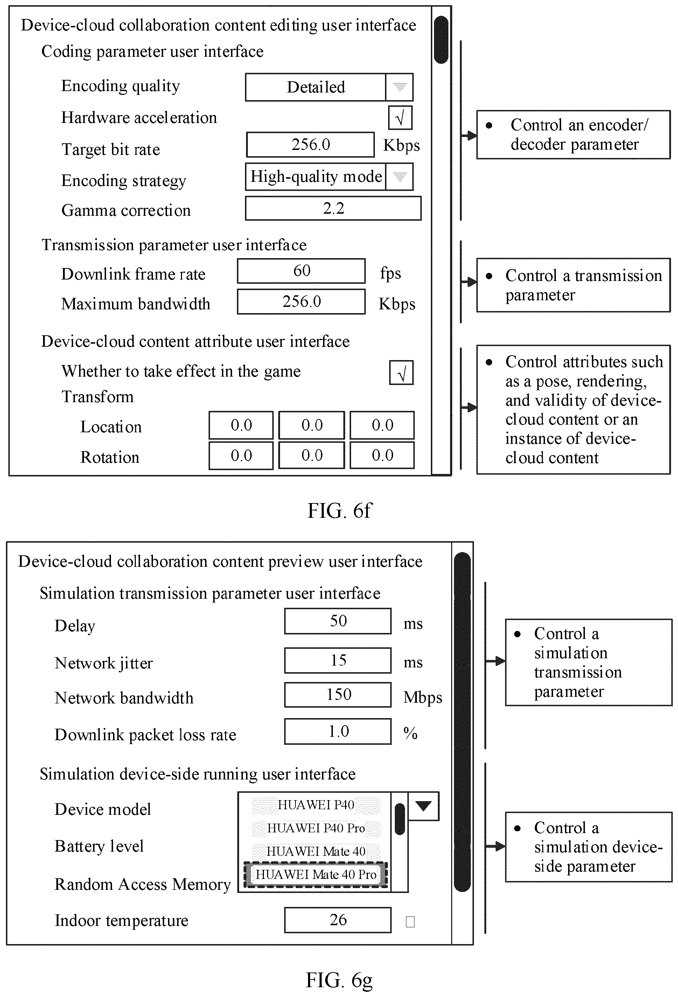

For example, as shown in FIG. 6f (FIG. 6f is a diagram of a game editor interface), one or more parameters of the instance attribute parameter, the coding parameter, and the transmission parameter of the device-cloud collaboration content may be set in a device-cloud collaboration content editing user interface.

For example, as shown in FIG. 6g (FIG. 6g is a diagram of a terminal-cloud content preview interface), one or more parameters may be separately set in a simulation transmission parameter user interface and a simulation terminal-side running user interface, to obtain a running environment of the receiving device through simulation.

3. In response to a trigger operation performed by the user on each of the foregoing interfaces/controls, modify a corresponding parameter.

4. In response to a trigger operation performed by the user on a preview control, display a cloud preview interface.

The device side generates cloud-side data of various device-cloud collaboration content (that is, device-cloud collaboration data). The possible cases are as follows:
(a) Generate device-cloud collaboration data in real time;
(b) generate device-cloud collaboration data offline; and
(c) read device-cloud collaboration data from a file.

If the user modifies the input into the foregoing control, steps 2 to 4 are repeated to generate new device-cloud collaboration data.

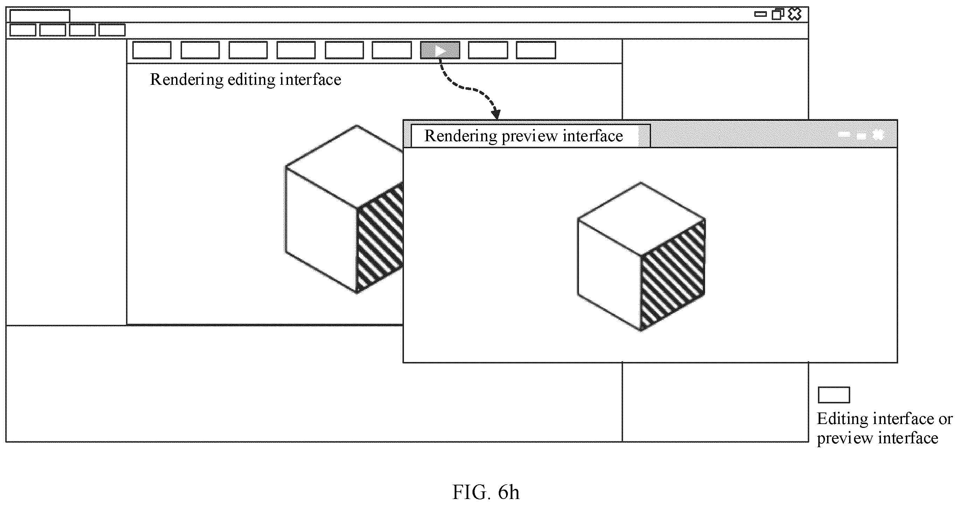

For example, as shown in FIG. 6h (FIG. 6h is a diagram of a preview interface), the user triggers the preview control, and a preview rendering interface is displayed, so that the user can intuitively view effect achieved by modifying the foregoing parameters.

### 5. Save a user input and end the running.

In this embodiment, in an editing state and a preview state of the game engine editor, a preview of presentation effect of device-cloud collaboration content on a specific terminal-side device in a specific network condition is completed, and an operating procedure of packaging and deployment, network configuration, and cloud-side and device-side configuration is omitted. The game engine editor provides a user interface and a user control for controlling the device-cloud collaboration content, and an operating procedure of modifying encoding/decoding and transmission parameters in the code is omitted. The user can directly modify the foregoing parameters based on the effect feedback to optimize the effect.

### Embodiment 2

This embodiment is in a device-cloud collaboration game production service scenario to which device-cloud collaboration DDGI is applied. The device-cloud collaboration DDGI is applied to a rendering system of a game. The device-cloud collaboration DDGI has several instances in a game scenario. In this embodiment, a target device on a device side is a mobile device, for example, a mobile phone or a tablet. In this embodiment, network transmission is used.

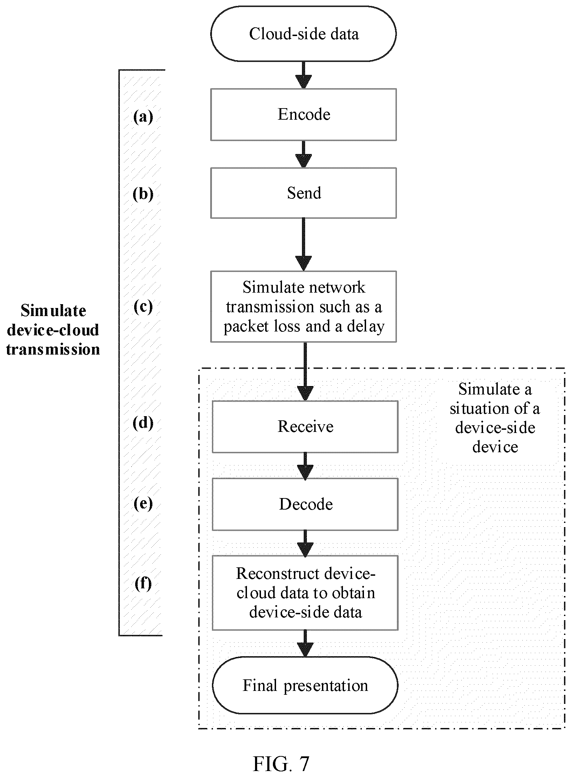

As shown in FIG. 7, a procedure of this embodiment is as follows:
1. Display an editing interface of the device-cloud collaboration DDGI in a game editor, as shown in FIG. 6e.
   In this embodiment, mapping processing is performed on a user control parameter and a program parameter, to simplify a parameter exposed to a user and facilitate understanding of the user. As shown in FIG. 7, a plurality of sets of encoder parameters are preset and mapped to "encoding quality".
2. A program responds to inputs of the user for the foregoing controls, and modifies a corresponding device-cloud collaboration DDGI attribute parameter, an encoding/decoding parameter, and a transmission parameter.
3. Different from Embodiment 1, generate device-cloud collaboration data in real time.
4. Simulate device-cloud transmission to obtain device-side data, as shown in FIG. 6f and FIG. 6g:
   (a) Encode cloud-side data based on a configuration of the encoding/decoding parameter of the foregoing device-cloud collaboration content;
   (b) send and receive a bitstream based on a configuration of the transmission parameter of the foregoing device-cloud collaboration content;
   (c) decode the bitstream based on the configuration of the encoding/decoding parameter of the foregoing device-cloud collaboration content; and
   (f) reconstruct device-cloud data based on a configuration of a simulation parameter presented on the foregoing device side, to obtain the device-side data.
5. Display, in an editing window or a preview window of a game engine editor, a presentation of the device-cloud collaboration DDGI on the device side by using the device-side data.
6. Same as Embodiment 1.
7. Same as Embodiment 1.

In this embodiment, a preview of device-cloud collaboration DDGI presentation effect on the device side is presented in an editing state and a preview state of the game engine editor, and an operating procedure of packaging and deployment, network configuration, and cloud-side and device-side configuration is omitted. The game engine editor provides a user interface and a user control for controlling the device-cloud collaboration DDGI, and an operating procedure of modifying encoding/decoding and transmission parameters in the code is omitted. The user can directly modify the foregoing parameters based on the effect feedback to optimize the effect.

### Embodiment 3

This embodiment is in a device-cloud collaboration game production service scenario to which device-cloud collaboration reflection is applied. The device-cloud collaboration reflection includes device-cloud collaboration plane reflection, device-cloud collaboration reflection probe, device-cloud collaboration plane space reflection, and device-cloud collaboration ray-traced reflection.

The foregoing device-cloud collaboration technologies are applied to a rendering system. These device-cloud collaboration technologies have one instance, several instances, or no instance in a game scenario. In this embodiment, a target device on a device side is a mobile device, for example, a mobile phone or a tablet. In this embodiment, network transmission is used.

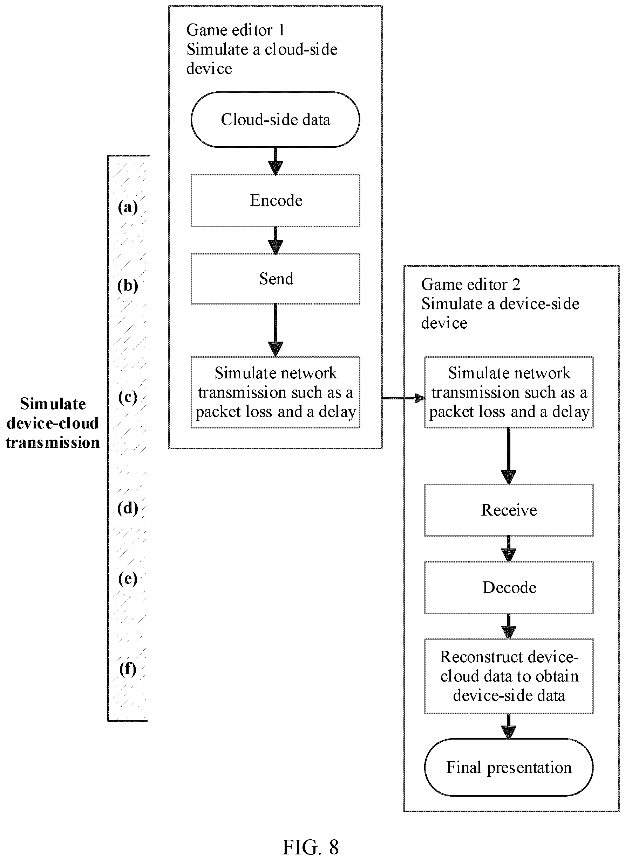

As shown in FIG. 8 (FIG. 8 is a diagram of two game editors), two game engine editors are enabled on a cloud-side device, one serves as a device-cloud collaboration cloud side, and the other serves as a device-cloud collaboration device side. A procedure of this embodiment is as follows:
1. Open two game editors of a same game project: a game editor 1 and a game editor 2.
   (a) In the game editor 1
      i. display a device-cloud collaboration content editing interface, as shown in FIG. 6b; and
      ii. select one or more instance objects of the device-cloud collaboration reflection, and display the device-cloud collaboration content editing interface on an attribute panel of the instance objects, as shown in FIG. 6e.
   (b) In the game editor 2
      i. display a device-cloud collaboration content editing and preview interface, as shown in FIG. 6b; and
      ii. select one or more instance objects of the device-cloud collaboration reflection, and display the device-cloud collaboration content editing interface on an attribute panel of the instance objects, as shown in FIG. 6e.
         In this embodiment, mapping processing is performed on a user control parameter and a program parameter on the device-cloud collaboration content editing interface, to simplify a parameter exposed to an editor and facilitate understanding of the editor. As shown in FIG. 6h, a plurality of sets of encoder parameters are preset and mapped to "encoding quality".
2. A program responds to inputs of the editor for the foregoing controls, and modifies a corresponding device-cloud collaboration reflection attribute parameter, an encoding/decoding parameter, and a transmission parameter.
3. Different from Embodiment 1 and Embodiment 2, start two game editor programs to respectively simulate a device-cloud collaboration cloud side and a device-cloud collaboration device side.
4. Simulate device-cloud transmission to obtain device-side data.
   (a) A game editor 1 program encodes various cloud-side data based on a configuration of the encoding/decoding parameter of the foregoing device-cloud collaboration content.
   (c) Based on a configuration of the transmission parameter of the foregoing device-cloud collaboration content
      i. the game editor 1 program sends various cloud-side data; and
      ii. a game editor 2 program receives various cloud-side data.
   (e) The game editor 2 program decodes a bitstream based on the configuration of the encoding/decoding parameter of the foregoing device-cloud collaboration content.
   (f) The game editor 2 program reconstructs the device-cloud data based on a configuration of a simulation parameter presented on the foregoing device side, to obtain the device-side data.
5. Display, in an editing window or a preview window of the game editor 2, a presentation of the device-cloud collaboration reflection on the device side by using the device-side data.
6. Same as Embodiment 1.
7. Same as Embodiment 1.

In this embodiment, an editing state and a preview state of the game engine editor 2 present a preview of presentation effect of the device-cloud collaboration reflection on the device side, and an operating procedure of packaging and deployment, network configuration, and cloud-side and device-side configuration is omitted. The game engine editor provides a user interface and a user control for controlling the device-cloud collaboration reflection, and an operating procedure of modifying encoding/decoding and transmission parameters in the code is omitted. The editor can directly modify the foregoing parameters based on the effect feedback to optimize the effect.

### Embodiment 4

This embodiment is in a device-cloud collaboration game test service scenario to which a device-cloud collaboration shadow mask is applied. The foregoing device-cloud collaboration technologies are applied to a rendering system, and there are one or more instances in a game scenario. In this embodiment, a target device on a device side is an electronic device, for example, a PC, a mobile phone, or a tablet. In this embodiment, a storage/loading manner is used to simulate transmission.

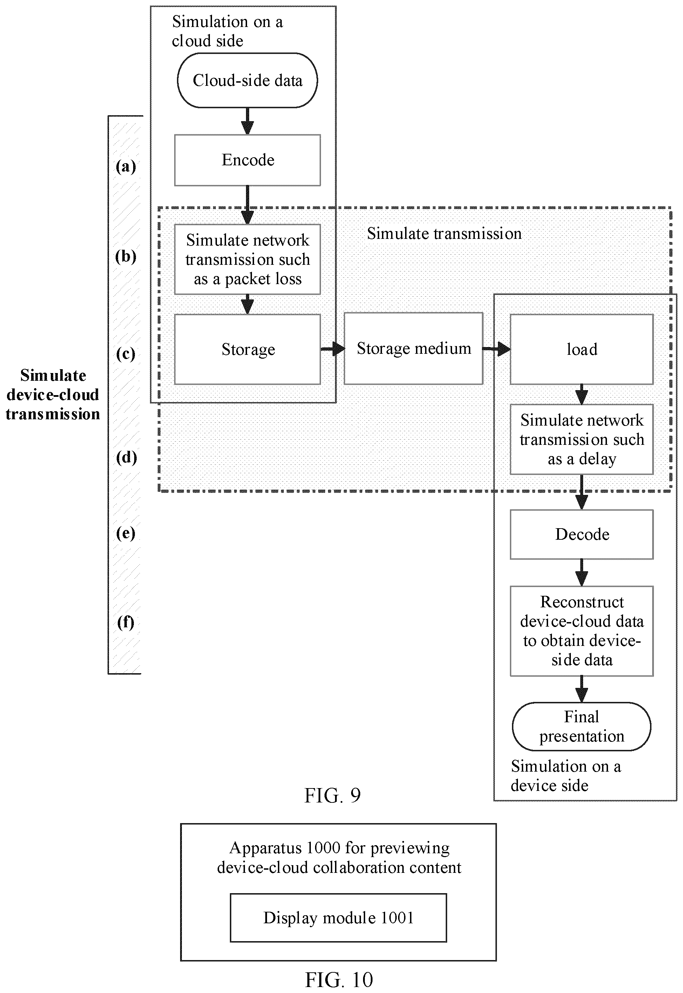

As shown in FIG. 9 (FIG. 9 is a diagram of simulating device-cloud transmission in a storage/read manner), a service scenario is a test scenario in game development. A plurality of groups of cloud-side data are generated on a cloud side, and the cloud-side data is stored in a storage medium. A device side is simulated to read the cloud-side data. The data is not transmitted in real time. Instead, the data is stored and read. A procedure of this embodiment is as follows:
1. Display an editing interface in a game editor.
   (a) A device-cloud collaboration content editing interface is displayed, as shown in FIG. 6b.
   (b) One or more instance objects of the device-cloud collaboration shadow mask are selected, and a device-cloud collaboration content editing interface is displayed on an attribute panel of the instance objects, as shown in FIG. 6e.
      In this embodiment, mapping processing is performed on a user control parameter and a program parameter on the device-cloud collaboration content editing interface, to simplify a parameter exposed to a tester and facilitate understanding of the tester. As shown in FIG. 6h, a plurality of sets of encoder parameters are preset and mapped to "encoding quality".
2. A program responds to inputs of the tester for the foregoing controls, and modifies a corresponding device-cloud collaboration shadow mask attribute parameter, an encoding/decoding parameter, and a transmission parameter.
3. Generate cloud-side data (namely, device-cloud data) of device-cloud collaboration shadow data.
4. Encode the cloud-side data based on a configuration of the encoding/decoding parameter of the foregoing device-cloud collaboration content, to obtain a bitstream.
5. Simulate a situation, for example, packet loss at a transmitter during device-cloud transmission based on the transmission parameter configuration of the device-cloud collaboration content, process the bitstream, and store the bitstream in a storage medium or a database.
6. In a same game editor program or another game editor program, simulate device-cloud transmission to obtain device-side data:
   (a) Read the bitstream from the storage medium or the database;
   (b) based on the transmission parameter configuration of the device-cloud collaboration content, perform processing such as frame error processing on the bitstream to simulate device-cloud transmission;
   (c) decode the bitstream based on the configuration of the encoding/decoding parameter of the foregoing device-cloud collaboration content; and
   (d) reconstruct device-cloud data based on a configuration of a simulation parameter presented on the foregoing device side, to obtain the device-side data.
7. Display, in an editing window or a preview window of the game editor 2, a presentation of device-cloud collaboration reflection on the device side by using the device-side data.
8. If the tester modifies an input into the control and performs a test again, repeat steps 2 to 5.
9. Save a user input and end the running.

In this embodiment, the bitstream is stored and read, so that a same piece of device-cloud data can be repeatedly used for a plurality of times, and an operating procedure of packaging and deployment, network configuration, and cloud-side and device-side configuration can be omitted. The game engine editor provides a user interface and a user control for controlling the device-cloud collaboration reflection, and an operating procedure of modifying codecs and transmission parameters in the code is omitted. The tester can directly modify the foregoing parameters based on test requirements to meet test case requirements.

FIG. 10 is a diagram of a structure of an apparatus 1000 for previewing device-cloud collaboration content according to this application. As shown in FIG. 10, the apparatus 1000 for previewing the device-cloud collaboration content in this embodiment may be used in a generation device of the device-cloud collaboration content. The apparatus 1000 for previewing the device-cloud collaboration content may include a display module 1001.

The display module 1001 is configured to display an editing interface, where the editing interface includes a preview control and a plurality of setting controls, the plurality of setting controls are used to set parameters related to the device-cloud collaboration content, and the parameters related to the device-cloud collaboration content include a parameter of a receiving device of the device-cloud collaboration content. The display module 1001 is further configured to: in response to a trigger operation on the preview control, display a preview interface based on the parameter of the receiving device, where the preview interface is used to simulate an interface for displaying the device-cloud collaboration content on the receiving device.

In a possible implementation, the parameter of the receiving device includes at least one of the following: a type of the receiving device, a model of the receiving device, a chip model of the receiving device, a battery level of the receiving device, resolution of the receiving device, a volume of the receiving device, and an ambient temperature of the receiving device.

In a possible implementation, the parameters related to the device-cloud collaboration content further include a coding parameter and/or a transmission parameter. The coding parameter is used to implement encoding processing on the device-cloud collaboration content to obtain a bitstream, or implement decoding processing on the bitstream to reconstruct the device-cloud collaboration content; and the transmission parameter is used to simulate a status and an environment of transmitting the bitstream.

In a possible implementation, the display module 1001 is further configured to: in response to a trigger operation on a first setting control, display a setting window of the coding parameter, where the setting window of the coding parameter includes a plurality of first setting subcontrols, and the plurality of first setting subcontrols each are used to set a video encoder/decoder parameter and an audio encoder/decoder parameter, and the first setting control is one of the plurality of setting controls.

In a possible implementation, the display module 1001 is further configured to: in response to a trigger operation on a second setting control, display a setting window of the transmission parameter, where the setting window of the transmission parameter includes a plurality of second setting subcontrols, the plurality of second setting subcontrols each are used to set a sending/receiving frame rate, a maximum sending/receiving bit rate, a network delay, network fluctuation, a physical distance, a physical location, and a transmission channel, and the second setting control is one of the plurality of setting controls.

In a possible implementation, the parameters related to the device-cloud collaboration content further include an instance attribute parameter of the device-cloud collaboration content. The instance attribute parameter is used to generate the device-cloud collaboration content.

In a possible implementation, the display module 1001 is further configured to: in response to a trigger operation on a third setting control, display a setting window of the instance attribute parameter, where the setting window of the instance attribute parameter includes a plurality of third setting subcontrols, the plurality of third setting subcontrols each are used to set a location, a proportion, rotation, effect strength, and a weight of an instance of the device-cloud collaboration content, and the third setting control is one of the plurality of setting controls.

In a possible implementation, the device-cloud collaboration content includes content of a device-cloud collaboration game, content of a device-cloud collaboration document, or content of a device-cloud collaboration live broadcast.

The apparatus in this embodiment may be configured to perform the technical solution in the method embodiment shown in FIG. 4. Implementation principles and technical effect thereof are similar. Details are not described herein again.

In an implementation process, steps in the foregoing method embodiments can be implemented by using a hardware integrated logical circuit in the processor, or by using instructions in a form of software. The processor may be a general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or transistor logic device, or a discrete hardware component. The general-purpose processor may be a microprocessor, or the processor may be any conventional processor or the like. The steps of the methods disclosed in embodiments of this application may be directly presented as being performed and completed by a hardware encoding processor, or performed and completed by a combination of hardware and a software module in an encoding processor. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

The memory in the foregoing embodiments may be a volatile memory or a non-volatile memory, or may include both a volatile memory and a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and methods described in this specification includes but is not limited to these and any memory of another proper type.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separate, and components displayed as units may or may not be physical units, and may be located at one location, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions in this application essentially, or the part contributing to the conventional technology, or a part of the technical solutions may be implemented in a form of a software product. The computer software product is stored in a storage medium and includes several instructions for instructing a computer device (a personal computer, a server, a network device, or the like) to perform all or a part of the steps of the methods in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for previewing device-cloud collaboration content, performed by a generation device of the device-cloud collaboration content, and comprising:
displaying an editing interface, wherein the editing interface comprises a preview control and a plurality of setting controls, the plurality of setting controls are used to set parameters related to the device-cloud collaboration content, and the parameters related to the device-cloud collaboration content comprise a parameter of a receiving device of the device-cloud collaboration content; and
in response to a trigger operation on the preview control, displaying a preview interface based on the parameter of the receiving device, wherein the preview interface is used to simulate an interface for displaying the device-cloud collaboration content on the receiving device.

2. The method according to claim 1, wherein the parameter of the receiving device comprises at least one of the following: a type of the receiving device, a model of the receiving device, a chip model of the receiving device, a battery level of the receiving device, resolution of the receiving device, a volume of the receiving device, or an ambient temperature of the receiving device.

3. The method according to claim 1 or 2, wherein the parameters related to the device-cloud collaboration content further comprise a coding parameter and/or a transmission parameter, wherein
the coding parameter is used to implement encoding processing on the device-cloud collaboration content to obtain a bitstream, or implement decoding processing on the bitstream to reconstruct the device-cloud collaboration content; and
the transmission parameter is used to simulate a status and an environment of transmitting the bitstream.

4. The method according to claim 3, further comprising:
in response to a trigger operation on a first setting control, displaying a setting window of the coding parameter, wherein the setting window of the coding parameter comprises a plurality of first setting subcontrols, and the plurality of first setting subcontrols each are used to set a video encoder/decoder parameter or an audio encoder/decoder parameter, and the first setting control is one of the plurality of setting controls.

5. The method according to claim 3 or 4, further comprising:
in response to a trigger operation on a second setting control, displaying a setting window of the transmission parameter, wherein the setting window of the transmission parameter comprises a plurality of second setting subcontrols, the plurality of second setting subcontrols each are used to set a sending/receiving frame rate, a maximum sending/receiving bit rate, a network delay, network fluctuation, a physical distance, a physical location, or a transmission channel, and the second setting control is one of the plurality of setting controls.

6. The method according to any one of claims 1 to 5, wherein the parameters related to the device-cloud collaboration content further comprise an instance attribute parameter of the device-cloud collaboration content; and
the instance attribute parameter is used to generate the device-cloud collaboration content.

7. The method according to claim 6, further comprising:
in response to a trigger operation on a third setting control, displaying a setting window of the instance attribute parameter, wherein the setting window of the instance attribute parameter comprises a plurality of third setting subcontrols, the plurality of third setting subcontrols each are used to set a location, a proportion, rotation, effect strength, or a weight of an instance of the device-cloud collaboration content, and the third setting control is one of the plurality of setting controls.

8. The method according to any one of claims 1 to 7, wherein the device-cloud collaboration content comprises content of a device-cloud collaboration game, content of a device-cloud collaboration document, or content of a device-cloud collaboration live broadcast.

9. An apparatus for previewing device-cloud collaboration content, used in a generation device of the device-cloud collaboration content, and comprising:
a display module, configured to display an editing interface, wherein the editing interface comprises a preview control and a plurality of setting controls, the plurality of setting controls are used to set parameters related to the device-cloud collaboration content, and the parameters related to the device-cloud collaboration content comprise a parameter of a receiving device of the device-cloud collaboration content, wherein
the display module is further configured to: in response to a trigger operation on the preview control, display a preview interface based on the parameter of the receiving device, wherein the preview interface is used to simulate an interface for displaying the device-cloud collaboration content on the receiving device.

10. The apparatus according to claim 9, wherein the parameter of the receiving device comprises at least one of the following: a type of the receiving device, a model of the receiving device, a chip model of the receiving device, a battery level of the receiving device, resolution of the receiving device, a volume of the receiving device, or an ambient temperature of the receiving device.

11. The apparatus according to claim 9 or 10, wherein the parameters related to the device-cloud collaboration content further comprise a coding parameter and/or a transmission parameter, wherein
the coding parameter is used to implement encoding processing on the device-cloud collaboration content to obtain a bitstream, or implement decoding processing on the bitstream to reconstruct the device-cloud collaboration content; and
the transmission parameter is used to simulate a status and an environment of transmitting the bitstream.

12. The apparatus according to claim 11, wherein the display module is further configured to: in response to a trigger operation on a first setting control, display a setting window of the coding parameter, wherein the setting window of the coding parameter comprises a plurality of first setting subcontrols, and the plurality of first setting subcontrols each are used to set a video encoder/decoder parameter or an audio encoder/decoder parameter, and the first setting control is one of the plurality of setting controls.

13. The apparatus according to claim 11 or 12, wherein the display module is further configured to: in response to a trigger operation on a second setting control, display a setting window of the transmission parameter, wherein the setting window of the transmission parameter comprises a plurality of second setting subcontrols, the plurality of second setting subcontrols each are used to set a sending/receiving frame rate, a maximum sending/receiving bit rate, a network delay, network fluctuation, a physical distance, a physical location, or a transmission channel, and the second setting control is one of the plurality of setting controls.

14. The apparatus according to any one of claims 9 to 13, wherein the parameters related to the device-cloud collaboration content further comprise an instance attribute parameter of the device-cloud collaboration content; and
the instance attribute parameter is used to generate the device-cloud collaboration content.

15. The apparatus according to claim 14, wherein the display module is further configured to: in response to a trigger operation on a third setting control, display a setting window of the instance attribute parameter, wherein the setting window of the instance attribute parameter comprises a plurality of third setting subcontrols, the plurality of third setting subcontrols each are used to set a location, a proportion, rotation, effect strength, or a weight of an instance of the device-cloud collaboration content, and the third setting control is one of the plurality of setting controls.

16. The apparatus according to any one of claims 9 to 15, wherein the device-cloud collaboration content comprises content of a device-cloud collaboration game, content of a device-cloud collaboration document, or content of a device-cloud collaboration live broadcast.

17. An electronic device, comprising:
one or more processors; and
a memory, configured to store one or more programs, wherein
when the one or more programs are executed by the one or more processors, the one or more processors are enabled to implement the method according to any one of claims 1 to 8.

18. A computer-readable storage medium, comprising a computer program, wherein when the computer program is executed by a computer, the computer is enabled to perform the method according to any one of claims 1 to 8.

19. A computer program product, wherein the computer program product comprises computer program code, and when the computer program code is run on a computer, the computer is enabled to perform the method according to any one of claims 1 to 8.
